# EUROPEAN PATENT SPECIFICATION

(11) **EP 1 766 894 B1**
(45) Date of publication and mention of the grant of the patent: **20.02.2013**
(21) Application number: 05755103.8
(22) Date of filing: 24.05.2005
(51) Int. Cl.: H04L 12/66

(54) **AUTHENTICATION PROCEDURE IN A SWITCH**
AUTHENTIFIKATIONSPROZEDUR IN EINEM SWITCH
PROCEDURE D'AUTHENTIFICATION DANS UN COMMUTATEUR

(30) Priority: 08.06.2004 US 863019; 08.06.2004 US 863854; 08.06.2004 US 862970; 08.06.2004 US 863016
(43) Date of publication of application: 28.03.2007
(73) Proprietor: Oracle America, Inc., Redwood City, CA 94065 (US)
(72) Inventor: JOHNSEN, Bjorn Dag, N-0687 Oslo (NO); JACKSON, Christopher, Westford, MA 01886 (US); BREAN, David, Boston, MA 02122 (US); TORUDRAKKEN, Ola, N-0671 Oslo (NO); FORSMO, Steinar, N-0688 Oslo (NO); RYGN, Hans, N-0654 Oslo (NO); SCHANKE, Morten, N-1177 Oslo (NO)
(74) Representative: Harris, Ian Richard
(86) International application number: PCT/US2005/018253
(87) International publication number: WO 2005/125128

(56) References cited:
- US-A- 4 896 319
- US-A1- 2002 087 383
- US-A1- 2002 101 967

## Description

### Field of the Invention

The present invention relates to communications networks, and in particular to operations such as switching packets through a network.

### Background of the Invention

The security of data communications networks has become increasingly important. As more and more sensitive data is transmitted over such networks, it is very important that data belonging to one user on the network does not somehow become exposed or visible to another user on the network. In addition, as organisations place ever greater reliance on the availability of networks for conducting their business and other operations, a network must be robust against hardware and software errors, component down-time, abnormal traffic conditions, and so on.

Some network problems may be innocent (i.e. non-malicious) in origin. For example, they may be caused by a hardware failure, a software bug, or some other weakness. In other cases, an adversary may try to cause network problems deliberately with malicious intent, such as for motives of terrorism, commercial gain, political persuasion, etc. Depending upon the motives of the attack, the particular objective may be to obtain inappropriate access to data communications over the network, or to induce non-availability or some other non-functioning of the network A malicious attack may exploit a known weakness in the network, and/or the attack may attempt to generate problems by the deliberate injection of errors, anomalous traffic, and so on.

It is therefore important for a network to be reliable and secure, and to be as resistant as possible against problems, whether deliberate or otherwise. In addition, it is also important for a network to be able to operate quickly and without delays.

US 4896319 discloses a high capacity metropolitan area network (MAN) in which data traffic from users is connected to data concentrators at the edge of the network, and is transmitter over fiber optic data links to a hub where the data is switched. The hub includes a plurality of data switching modules, each having a control means, and each connected to a distributed control space division switch. The data switching modules, whose inputs are connected to the concentrators, perform all checking and routing functions, The data switching modules chain groups of incoming packets destined for a common outlet of the space division switch so that only one connection in that switch is required for transmitting each group of chained packets from a data switching module to a concentrator. MAN provides security features including a port identification supplied by the data concentrators, and a check that each packet is from an authorized source user, transmitting on a port associated with that user, to an authorized destination user that is in the same group (virtual network) as the source user.

US 2002/087383 discloses a system and method for opening and tracking trouble tickets over the public Internet. A customer service management system provides information included within a customer profile record to a Web enabled infrastructure which is accessible by a remote customer workstation having a web browser and Internet access. The customer profile information is used to prepopulate data fields in dialogs used to open a trouble ticket. Once a trouble ticket is opened, the customer workstation tracks the existing trouble tickets through a browser based graphical user interface.

US 2002101967 discloses a method of settling accounts of buyers and sellers of telecommunications services by an online exchange system which includes storing data representing a financial account of at least one seller and at least one buyer, wherein the financial account includes at least one of accounts receivable and cash receipts. A service node receives an offer to sell the services from the at least one seller and requests to buy the services from the at least one buyer. The service node then matches the offer and requests in accordance with one or more parameters specified in the offets and requests. A route table is generated based on the routes specified in the matched offers and requests and a switch node is configured based on the route table. Fees are computed based on the usage of the matched routes and the financial accounts of the at least one seller and at least one buyer based on the computer fees.

### Summary of the Invention

The invention is defined in the appended claims.

Accordingly, one embodiment of the invention provides a method of operating a switch having multiple ports in a communications networks, such as an InfiniBand network. The method comprises storing for each port in the switch a respective set of routings and receiving a packet at a port in the switch. The routings corresponding to the port at which the packet was received are accessed to determine a port from which to forward the packet from the switch. The packet is then forwarded over the network from the determined port.

In one embodiment, the set of routings for a port are stored in a routing table, and each port in the switch includes its own routing table. Alternatively, the routings for each different port may be stored together centrally somewhere in the switch (but differentiated at least in part by port).

In one embodiment, the routings map destination identifiers to output ports, so that a destination identifier is extracted from a received packet and used to access a set of routings. Certain destination identifiers may be marked in the routings as invalid for a port. In this case packets received at the port are discarded if the destination identifier extracted from the packet is indicated as invalid. Marking a destination identifier as invalid may be done with a control bit, or by indicating some special output port for that destination identifier that does not correspond to a legal output port (e.g. because it represents the port at which the packet was received).

In one embodiment, a packet progresses through the switch by being forwarded from the port where the packet is received to an output buffer of each output port on the switch. A receive enable signal is then transmitted to the output buffer corresponding to the particular port from which the packet is to be forwarded onto the network.

Another embodiment of the invention provides a switch for use in a communications network. The switch comprises multiple ports for connection to the network, and has for each of the multiple ports, a respective stored set of routings. The switch further includes control logic for receiving a packet at a port in the switch, and accessing the set of routings corresponding to the port at which the packet was received This allows the control logic to determine a port from which to forward the packet from the switch in accordance with the routings.

It will be appreciated that the switch embodiment of the invention will generally benefit from the same particular features as the method embodiment of the invention described above.

A multi-port networking switch may be operable to detect a destination of an incoming packet and to compare the detected destination to known destinations to determine an output port of the switch for retransmission of the packet. Data regarding the set of known destinations is maintained at each port of the switch

An IminiBand switch may comprise a plurality of port pairs. Each port pair comprises an input port and an output port. Each input port comprises a retriever for retrieving a destination address from a received packet and a comparator for comparing the retrieved destination address to a set of known destination addresses to select a target output port for the packet. Data regarding the set of know destination addresses can be stored at each input port.

All ports may have a copy of the same routing data, or different ports may have different (i.e. port-specific) routing data. Having multiple copies of routing data at different ports (whether port-specific or not) helps to avoid delays in forwarding a packet through a switch (compared to having to consult a single central set of routing data). In particular, this approach avoids having to wait for signals to reach a central forwarding table and also removes any possible contention between different input ports simultaneously attempting to access a single shared table. This is achieved without requiring a significant increase in integrated circuit real estate, since the additional space taken up by having multiple instances of the table is offset by the removal of a need for contention handling mechanisms.

A method is provided for handling an incoming packet at a node in a network The method includes associating at least one source identifier with a link to the node, and receiving a packet at the node over the link. A source identifier is extracted from the received packet and compared with the source identifier associated with the link, thereby allowing the packet to be authenticated. This approach provides assurance to the receiving node that the packet was actually sent by the source (node) that it appears to have been sent by. This can be a valuable check, for example, if it is desired to provide different nodes with access to different data or different services.

The source identifier may be associated with a link that comprises at least one range of source identifiers, and the extracted source identifier is authenticated if it lies within the range(s) of source identifiers. A pair of registers may be used to store each range of source identifiers for performing the comparison.

The node may comprise a switch in the network having multiple ports, and the link is connected to one of the ports of the switch. An incoming packet to the switch includes a destination identifier having the same format as the source identifier. The switch includes a routing table that maps a destination identifier to one of the multiple ports for onward transmission of the packet. The switch may include a routing table for each port, such as described above, which is then used to perform the authentication. In one embodiment, this is achieved by accessing the routing table using the extracted source identifier as if it were a destination identifier in order to determine whether or not a received source identifier is legal for that port.

In one embodiment the incoming packet is discarded if the packet is not authenticated, and an error notification may be raised.

In one embodiment, the authentication is only performed if the link is connected to an untrusted node in the network. Such an untrusted node may for example, represent an end node rather than a switch, or a switch that is not included in a group of trusted switches.

### Brief Description of the Drawings

Specific embodiments of the present invention will now be described by way of example only with reference to the accompanying figures in which:
Figure 1 is a schematic block diagram showing an example of interconnection of computing system elements via the InfiniBand networking architecture.
Figure 2 is a schematic block diagram of a simplified arrangement of an InfiniBand Architecture system.
Figure 3 is a schematic block diagram of another simplified arrangement of an InfiniBand Architecture system.
Figure 4 is a schematic block diagram of a further simplified arrangement of an InfiniBand Architecture system.
Figure 5 is a schematic illustration of the layers of an InfiniBand Architecture system.
Figure 6 shows schematically the structure of a message to be transmitted via an InfiniBand Architecture system.
Figure 7 shows schematically the format of a packet of the message of Figure 6.
Figure 8 is a schematic block diagram showing an arrangement wherein the InfiniBand Architecture is used to interconnect components within a computer system.
Figure 9 is a schematic block diagram showing an arrangement wherein the InfiniBand Architecture is used as an interconnect between computer systems.
Figure 10 is a schematic block diagram showing a switch for use in an InfiniBand network in accordance with one embodiment of the invention,
Figure 10A is a schematic block diagram showing the forwarding of a packet through the switch of Figure 10 in accordance with one embodiment of the invention.
Figure 11 is a schematic block diagram of a port for use in an InfiniBand network in accordance with one embodiment of the invention.
Figure 12 is a schematic diagram showing a possible configuration of nodes and switches in an InfiniBand network.
Figure 12A is a schematic diagram showing a possible configuration of nodes and switches in an InfiniBand network.
Figure 13 is a flowchart for processing destination identifiers in accordance with one embodiment of the invention.
Figure 13A is a flowchart illustrating a method of checking the service level of an incoming packet in accordance with one embodiment of the invention.
Figure 13B is a more detailed flowchart (compared with Figure 13A) illustrating a method of checking the service level of an incoming packet in accordance with one embodiment of the invention.
Figure 13C is a flow-chart depicting a method for verifying the source of packets in accordance with one embodiment of the invention.
Figure 14 is a schematic block diagram of a port for use in an InfiniBand network in accordance with one embodiment of the invention.
Figure 14A is a schematic block diagram illustrating a port arranged to check the service level of an incoming packet in accordance with one embodiment of the invention.
Figure 14B is a schematic block diagram illustrating a port arranged to check the service level of an incoming packet in accordance with another embodiment of the invention.
Figure 14C is a schematic diagram showing a hardware solution for supporting the method of Figure 13C in accordance with one embodiment of the invention.
Figure 14D is a schematic diagram showing a hardware solution for supporting the method of Figure 13C in accordance with another embodiment of the invention.
Figure 15 is a flowchart illustrating a method of checking the service level of an incoming packet for use with the embodiment of Figure 14B in accordance with one embodiment of the invention.
Figure 16 is a flowchart depicting forwarding a packet through a switch in accordance with one embodiment of the invention.

### Detailed Description

### 1) The InfiniBand Architecture

The InfiniBand architecture provides a standard computer networking environment defined and administered by the InfiniBand Trade Association, which was founded by Compaq, Dell, Hewlett-Packard, IBM, Intel, Microsoft and Sun Microsystems (InfiniBand is a trademark of the InfiniBand Trade Association; other names are trademarks of their respective companies). The InfiniBand Architecture defines a System Area Network (SAN) for connecting multiple independent processor platforms (i.e. host processor nodes), I/O platforms and I/O devices. A full definition of the InfiniBand Architecture may be found in the InfiniBand Architecture Specification Volumes 1 and 2, available from the InfiniBand Trade Association (www.InfiniBandta.org), and which is hereby incorporated hereinto by reference.

An InfiniBand Architecture system area network (SAN) provides a communications and management infrastructure supporting both I/O and interprocessor communications for one or more computer systems. An InfiniBand Architecture system can range from a small server with one processor and a few I/O devices to a massively parallel supercomputer installation with hundreds of processors and thousands of I/O devices.

The InfiniBand Architecture defines a switched communications fabric allowing many devices to communicate concurrently with high bandwidth and low latency in a protected, remotely managed environment. An end node can communicate over multiple InfiniBand Architecture ports and can utilise multiple paths through the InfiniBand Architecture fabric. A multiplicity of InfiniBand Architecture ports and paths through the network are provided both for fault tolerance and for increased data transfer bandwidth.

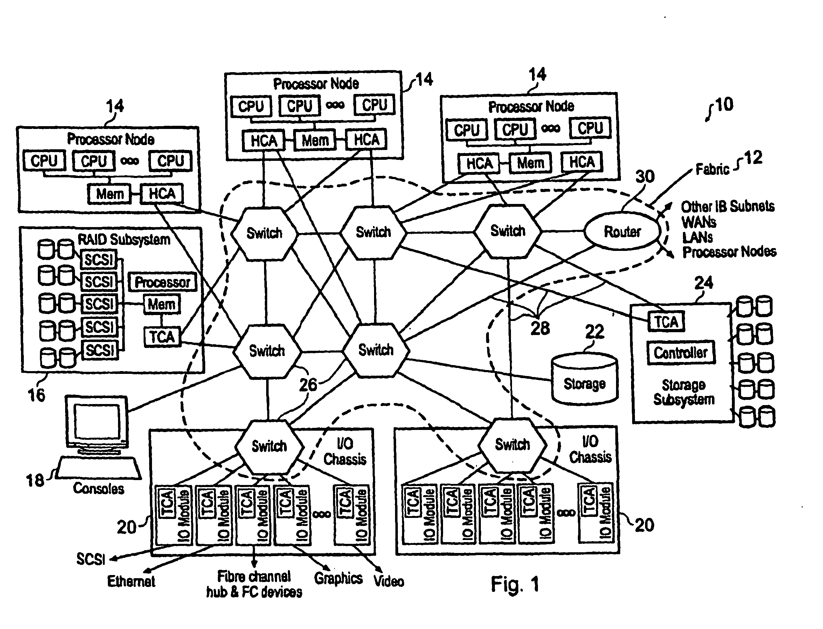

An example of an InfiniBand Architecture system area network is shown in Figure 1. As can be seen from Figure 1, the system area network 10 comprises an InfiniBand Architecture fabric (or subnet) 12 made up of cascaded switches and routers. The fabric 12 provides links between a number of processor nodes 14 and other nodes including a RAID subsystem 16, consoles 18, I/O chassis 20, storage 22 and a storage subsystem 24. The fabric 12 comprises a plurality of switches 26 with InfiniBand links 28 providing data connections between the switches 26 and between the nodes attached to the fabric 12. Also included in the fabric 12 is a router 30 for providing connections to and from other networks, which may be other InfiniBand Architecture subnets, non-InfiniBand Architecture LANs and WANs, and/or processor nodes. I/O units connected via the fabric 12 may range in complexity from single ASIC devices such as a SCSI (Small Computer System Interface) or LAN adapter to large memory rich RAID subsystems that rival a processor node in complexity. Collectively, the processor nodes 14, RAID subsystem 16, consoles 18, I/O chassis 20, storage 22 and storage subsystems 24 are known as end nodes 32.

Each end node 32 includes a channel adapter, which may be a Host Channel Adapter (HCA) or a Target Channel Adapter (TCA). Host Channel Adapters are found in processor nodes 14, and Target Channel Adapters are found in I/O nodes 16, 18, 20, 22 and 24. Host Channel Adapters are configured to issue requests across the fabric 12, and Target Channel Adapters are configured to respond to such requests, for example by supplying requested data or storing supplied data.

Each channel adapter uses a queuing system based on Queue Pairs, one queue for send operations and one for receive operations. Each queue pair may therefore be considered to provide a virtual communication port for a channel adapter. Each channel adapter may have up to 2²⁴ Queue Pairs, which may be assigned individually or in combination to handle communications involving different parts (or consumers) of the end node 32. For example, a processor node 16 may comprise a plurality of processors and each processor may have one or more individual Queue Pairs assigned to handle requests and responses flowing to and from that particular processor of the processor node via fabric 12. Alternatively, or in addition, a processor of a given processor node 16 may be running more than one process and each process may have one or more Queue Pairs assigned to handle requests and responses flowing to and from that process via the fabric 12.

The interconnects 28 may be one of three classes, 1x, 4x or 12x, referring to the number of parallel lanes making up that interconnect. Each lane is a single serial connection over a single physical signal carrier path (whether electrical or optical). Thus the bandwidth available to each interconnect is defined by a combination of the number of lanes and the maximum data rate of the physical signal carrier making up each lane.

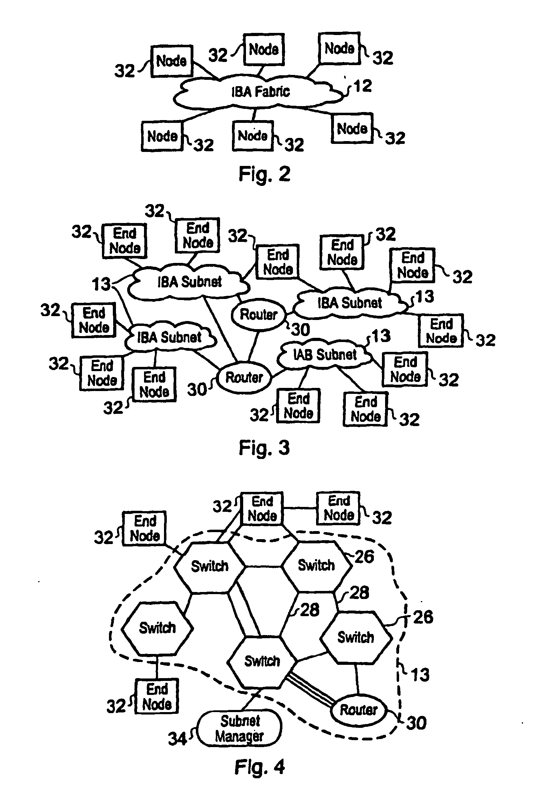

Examples of possible InfiniBand Architecture topologies are shown in Figures 2, 3 and 4. Figure 2 shows a high level simplified topology example where a number of end nodes 32 are interconnected by the fabric 12. An InfiniBand Architecture network may be subdivided into subnets 13 interconnected by routers 30 as illustrated in Figure 3. Any particular end node 32 may be attached to a single subnet 13 or to multiple subnets 13. Shown in Figure 4 is an example of the structure of a subnet 13. The subnet 13 comprises end nodes 32, switches 26, routers 30 and subnet managers 34 interconnected by links 28. Each end node 32 may attach to a single switch 26, multiple switches 26 and/or directly with each other. In the case of a direct connection between end nodes 32, the two or more directly linked end nodes form in effect an independent subnet with no connectivity to the remainder of the devices attached to the main subnet, and one of the interconnected end nodes functions as the subnet manager for that link.

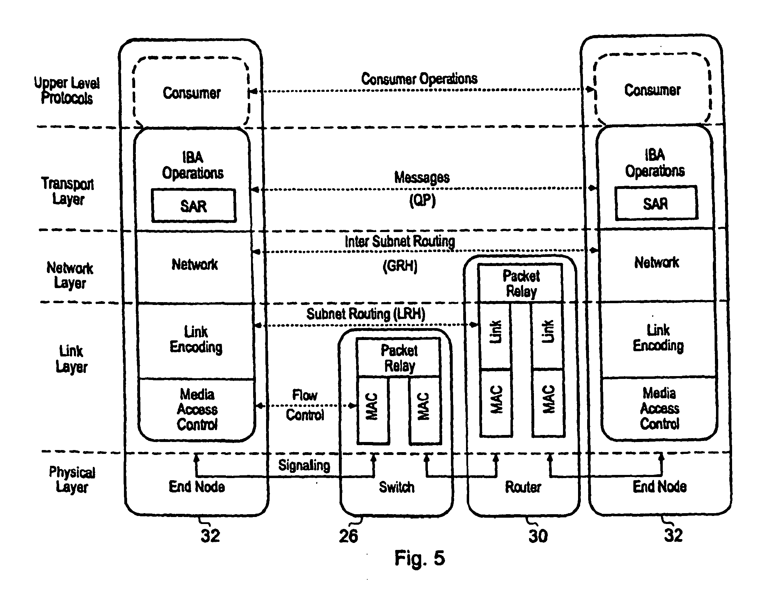

Referring now to Figure 5, there is shown an illustration of the architecture layers of an InfiniBand Architecture system. Starting with the physical layer, this specifies how bits are placed onto the interconnections 28 and defines the symbols used for framing (i.e. start of packet and end of packet), data, and fill between packets (idles). It also specifies the signalling protocol as to what constitutes a validly formed packet (i.e. symbol encoding, proper alignment of framing symbols, no invalid or non-data symbols between start and end delimiters, no disparity errors, synchronisation method, etc.). The signalling protocol used by the InfiniBand Architecture utilises a differential signal. The interconnects 28 between nodes of an InfiniBand Architecture network are normally provided by electrical signal carriers such as copper cables or optical signal carriers such as optical fibres. As discussed above, the maximum data rate of the interconnect is limited by the bandwidth of the selected channel. The physical layer also includes de-skewing circuitry for compensating for skew latency in the channels.

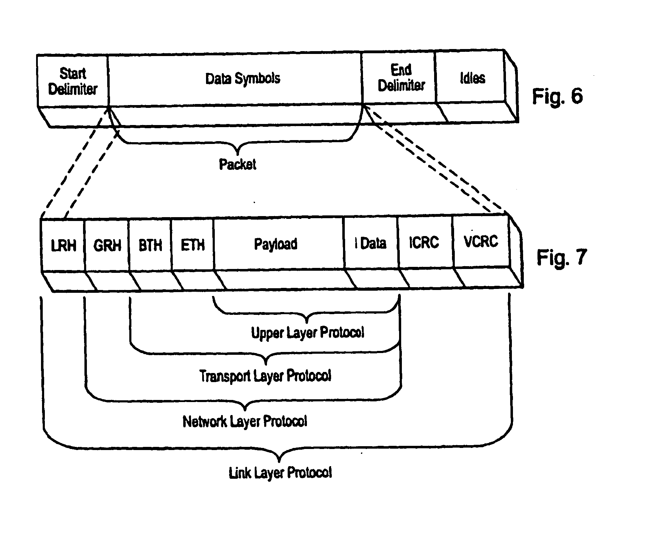

The structure of a message to be transmitted through the fabric 12 via the interconnections 28 is illustrated in Figure 6. As can be seen from Figure 6, the message comprises a start delimiter, a packet comprising data symbols, an end delimiter and a number of idles.

The data packet format is illustrated in Figure 7. Packets may be one of two types, IBA (InfiniBand Architecture) Packets or RAW (non InfiniBand Architecture) Packets. IBA Packets have IBA defined transport headers, are routed on InfiniBand Architecture fabrics 12, and use native InfiniBand Architecture transport facilities. Raw Packets may be routed on IBA fabrics but do not contain InfiniBand Architecture transport headers. From an InfiniBand point of view, these packets contain only InfiniBand routing headers, payload and CRC. The InfiniBand Architecture does not define the processing of these packets above the link and network layers. These packets can be used to support non-InfiniBand Architecture transports (e.g. TCP/IP, IPX/SPX, NetBEUI, etc) over an InfiniBand fabric.

The link layer describes the packet format and protocols for packet operation, e.g. flow control and how packets are routed within a subnet between the source and the destination. Packets may be data packets that convey data between end nodes and comprise a number of different headers which may or may not be present. Alternatively, packets may be Link Management Packets, which are used to train and maintain link operation. These packets are used to negotiate operational parameters between the ports at each end of a link such as bit rate, link width etc. The link layer is responsible for flow control handling to prevent the loss of packets due to buffer overflow by the receiver at each end of a link. This mechanism does not describe end to end flow control such as might be utilised to prevent transmission of messages during periods when receive buffers are not posted. The terms "transmitter" and "receiver" are utilised to describe each end of a given link. The transmitter is the node sourcing data packets. The receiver is the consumer of the data packets. Each end of the link has a transmitter and a receiver. The InfiniBand Architecture utilises an "absolute" credit based flow control scheme, in which InfiniBand Architecture receivers provide a "credit limit". A credit limit is an indication of the total amount of data that a transmitter has been authorised to send since link initialisation.

Credit control is performed by a media access control (MAC) protocol. With respect to a given link, a receiver advertises (by means of a link packet) that credit is available, the amount of which is based on the current status of the receiver's receive buffers. The transmitter receives the link packet and determines how much transmit credit is available from the contents of the link packet. The transmitter then assigns itself the available credit and transmits data packets to the receiver while simultaneously decrementing its available credit count. The transmitter calculates its remaining available credit based on the initial figure determined from the receiver link packet and a record of how much data it has transmitted since that link packet was received.

Errors in transmission, in data packets, or in the exchange of flow control information can result in inconsistencies in the flow control state perceived by the transmitter and receiver. The InfiniBand Architecture flow control mechanism provides for recovery from this condition. The transmitter periodically sends an indication of the total amount of data that it has sent since link initialisation. The receiver uses this data to re-synchronise the state between the receiver and transmitter.

As can be seen in Figure 7, the link layer adds a Local Route Header (LRH) to the front of the packet and adds Invariant and Variant Cyclic Redundancy Checks (ICRC and VCRC) to the end of the packet. The Local Route Header is always present and identifies the local source and local destination where switches 26 will route the packet. The Invariant Cyclic Redundancy Check covers all fields within the packet which do not change as the message traverses the fabric. The Variant Cyclic Redundancy Check covers all the fields of the packet. The combination of the two CRCs allows switches 26 and routers 30 to modify appropriate fields and still maintain data integrity for the transport control and data portion of the packet.

The network layer, which is present only within routers 30 and end nodes 32, describes the protocol for routing a packet between subnets 13. Thus a Global Route Header (GRH) is present in a packet that traverses multiple subnets 13. The Global Route Header identifies the source and destination ports of the message. Routers 30 use the contents of the Global Route Header to determine the forwarding requirements of the message. As the message traverses different subnets 13 the routers 30 modify the content of the Global Route Header and replace the Local Route Header but the source and destination port identities are not changed and are protected by the Invariant Cyclic Redundance Check. Thus the network and link layers operate together to deliver a packet to the desired destination.

The transport layer, which is present only within end nodes 32, delivers the packet to the proper Queue Pair within the channel adapter of the destination end node 32 and instructs that Queue Pair as to how the packet's data should be processed. The transport layer also has responsibility for segmenting a message into multiple packets when the message's data payload is greater than the maximum payload that can be carried by a single packet. The receiving Queue Pair then reassembles the data from the multiple packets at the destination end node 32. The transport layer adds up to two headers to the packet. The Base Transport Header (BTH) is present in all IBA Packets but not in RAW Packets. It identifies the destination Queue Pair and indicates an operation code, packet sequence number and specifies the operation (Send, Read, Write, etc). A number of Extended Transport Headers (ETH) may be present conditional on the class of service and operation code.

The Packet Sequence Number is initialised for a given Queue Pair as part of the communications establishment process and increments each time that Queue Pair creates a new packet. The receiving Queue Pair tracks the received Packet Sequence Number to determine whether any packets have been lost. For reliable service, the receiver end node 32 may transmit an acknowledgement back to the originator end node to indicate whether all packets have been received successfully.

The upper level protocols are completely software based and may comprise any number of protocols used by various user consumers. The payload is the data carried by the packet and I Data is handling data associated with a work activity to be performed on the payload. Also present in the upper level protocols are Subnet Management and Subnet Services protocols. These protocols provide management structure including management messages for management of the subnet 13. Each subnet 13 requires only a single Subnet Manager application 34 which may be present in a dedicated node (as illustrated in Figure 4) or may reside in another node, including a switch 26 or a router 30 as well as an end node 32.

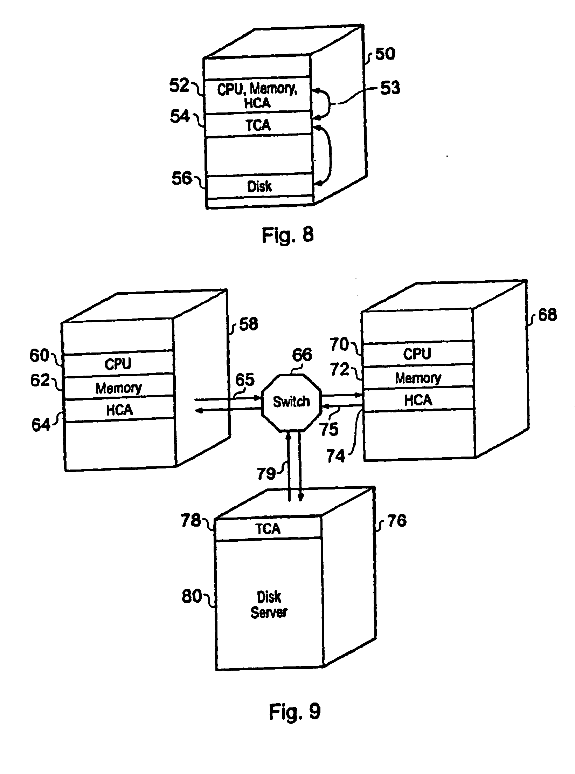

Examples of simple InfiniBand Architecture systems are shown in Figures 8 and 9. Figure 8 shows an arrangement where the InfiniBand Architecture is used to interconnect components within a standard computer system rack 50. In this example, the CPU, memory and a Host Channel Adapter 52 are interconnected using conventional non-InfiniBand Architecture techniques. The Host Channel Adapter 52 of the CPU and memory communicate via an InfiniBand Architecture interconnect 53 with a Target Channel Adapter 54. The Target Channel Adapter 54 communicates with a disk drive unit 56 via a SCSI (Small Computer System Interface) connection. Thus the InfiniBand Architecture is configured in this example to facilitate communications between elements of the same computer system.

Figure 9 shows an arrangement where the InfiniBand Architecture is used only as an interconnect between computers. In this example a first computer system is mounted in a rack 58 and comprises a CPU 60, memory 62 and a Host Channel Adapter 64 interconnected via non-InfiniBand Architecture techniques. Via the Host Channel adapter 64, the first computer system communicates to and from a switch 66 across interconnects 65. Also connected to the switch 66 is a second computer system mounted in a rack 68 and comprising a CPU 70, memory 72 and a Host Channel Adapter 74, which connects to the switch 66 via interconnects 75. Data storage for the first and second computer systems is provided by a disk server 80 mounted in a rack 76. The disk server 80 connects with a Target Channel Adapter 78 also mounted within the rack 76 by non-InfiniBand Architecture techniques. The Target Channel Adapter 78 connects to the switch 66 via interconnects 79. Thus the InfiniBand Architecture is configured in this example to facilitate communication between more than one distinct computer system. The techniques shown in Figures 8 and 9 may be employed in combination with one another, for example a computer system using the InfiniBand Architecture for internal communications may also be connected to other computer systems via a network based on the InfiniBand Architecture.

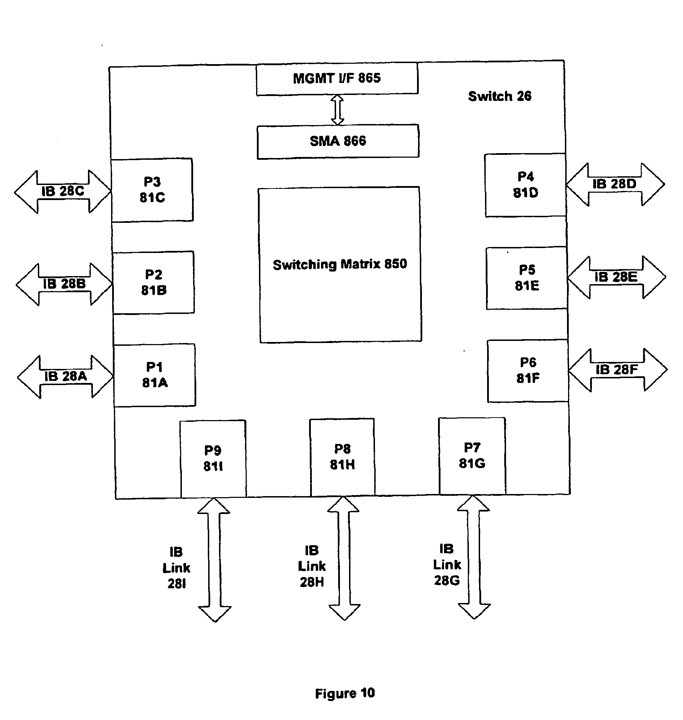

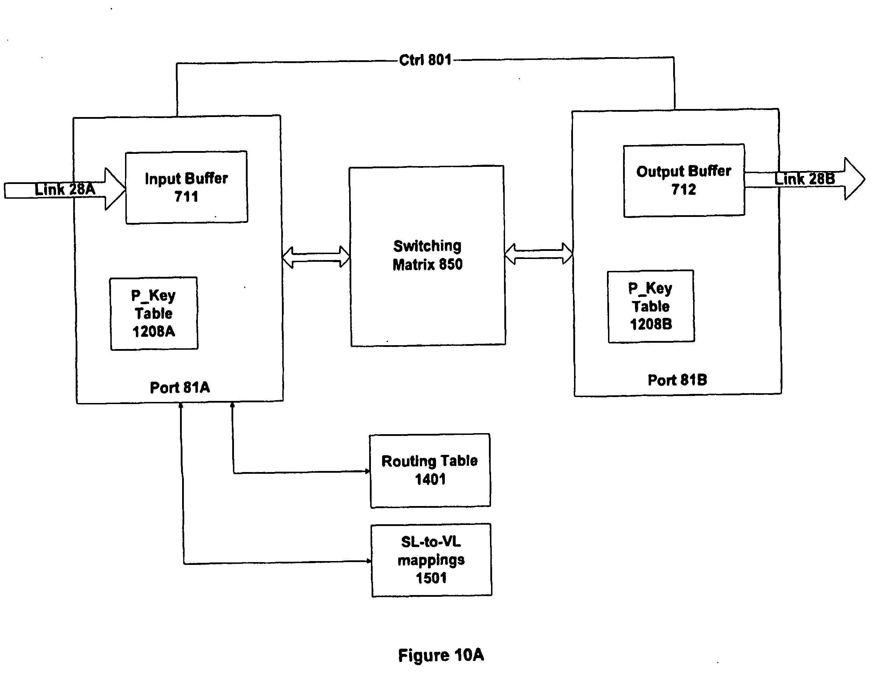

Figure 10 illustrates a switch 26 for use in fabric 12 in accordance with one embodiment of the invention. Switch 26 is implemented as a semiconductor device, for example an application specific integrated circuit (ASIC), and includes a management control interface 865, a subnet management agent (SMA) 866, multiple ports 81, and a switching matrix 850.

The management interface 865 provides access to the switch 26 for one or more external control systems, and can be used to configure switch 26 as appropriate depending upon the circumstances. For example, the subnet management agent 866 can communicate with the subnet manager 34 (see Figure 4) via management interface 865.

In the embodiment illustrated in Figure 10, switch 26 has nine ports 81, denoted in Figure 10 as P1 81A, P2 81B, P3 81C, P4 81D, P5 81E, P6 81F, P7 81G, P8 81H, and P9 81I. Each port is attached to a corresponding InfiniBand duplex link 28 providing transmit (Tx) and receive (Rx) capability, and comprising one, four or twelve physical lanes. Each physical lane provides a basic data rate of 2.5GHz, so that switch 26 provides connectivity for a total of 96 (9 x 12) lanes. The physical lanes into any given port are managed as a single logical link, and can be flow controlled using a credit-based link level flow control, as described above.

In accordance with the InfiniBand Architecture, each link 28 can be subdivided into a maximum of sixteen virtual lanes (VL) to provide logically separate channels that are multiplexed onto a single logical link. The first fifteen virtual lanes (denoted VL0 through VL14) support general purpose data communications, while the remaining virtual lane (denoted VL15) is used for special management purposes. (Note that virtual lane VL15 is not flow-controlled, and so should be considered as not reliable). An InfiniBand switch must support at least two virtual lanes on each link (i.e. data lane VL0 and management lane VL15). In one particular embodiment, switch 26 supports four virtual lanes for general data communication plus one virtual lane for management purposes (VL15).

In accordance with the InfiniBand Architecture, a packet can be specified as having one of sixteen different service levels (SLs). The service level for a particular packet is specified in the local route header (LRH), and remains constant as the packet transits an InfiniBand subnet. The SL value in the packet determines the virtual lane over which the packet is transmitted across any given link in the subnet. This is achieved by having a switch maintain a set of SL-to-VL mappings (which are specific to each input port/output port combination). The SL-to-VL mappings are initialized and maintained by the subnet manager 34 (see Figure 4).

On receipt of an incoming packet, a port first determines the output port to forward the packet to, based on the DLID value in the packet (as explained in more detail below). The port then uses the SL-to-VL mappings to decide the virtual lane over which the packet should be sent, given the SL value in the packet and the output port from which the packet will be transmitted. Note that since different switches may support different numbers of virtual lanes, a packet may be assigned to different virtual lanes for different links of its journey across a subnet.

The range of service levels can be used to provide a quality of service (QoS) mechanism in an InfiniBand network. Thus any given virtual lane can be classified as low priority or high priority, and assigned a weight within that classification. The weight and classification of a virtual lane control its access to the bandwidth of the physical link, relative to the other virtual lanes supported over the same link. The service level of a packet then determines the virtual lane utilised by the packet over the link, in accordance with the SL-to-VL mappings. These mappings can be configured to reflect the number of virtual lanes provided by any given link and also the quality of service policy of the network.

The InfiniBand Architecture supports the concept of partitioning in order to provide logical isolation of components sharing the same subnet. All nodes included in a route from a source to a destination must share the same 16-bit partition key (P_Key), otherwise they are unable to communicate with one another (or even to recognise each other's existence). An individual node may support multiple partition keys, and so belong to multiple different partitions.

A member of a partition can be denoted as a full member or a limited (partial) member, dependent on the high-order bit of the partition key. A full member can communicate with either a limited member or a full member, but a limited member cannot communicate with another limited member of that partition (only a full member). This model corresponds to a client-server architecture, where servers are full members and clients are partial members, and clients do not need generally to talk directly to one another.

Each queue pair at an end node has a partition key table which is assigned to it by the subnet manager 34 (see Figure 4). A queue pair is assigned an index into the partition key table, and can then use this index to obtain and store the appropriate partition key into the local route header (LRH) for each outgoing packet. Conversely, a queue pair receiving a packet checks that the P_Key value within the incoming packet matches the indexed P_Key value in the P_Key table (if not, the incoming packet is discarded).

Each port 81 on switch 26 is provided with an input buffer (not shown in Figure 10). The input buffer receives data arriving at a port 81 over its respective link 28, and stores this data pending transfer through the switching matrix 850. In the embodiment mentioned above, each input buffer is divided into four sections, corresponding to the four virtual lanes on the associated link 28. This ensures that data from different virtual lanes is kept properly isolated.

Switching matrix 850 is used to transport data from one port to another. For example, if data arrives on link 28D at port P4 81 D and is to be forwarded on link 28A, then switching matrix 850 is responsible for transferring the data from port P4 81D to port P1 81A (corresponding to link 28A). It will be appreciated that while ports 81 are constrained by the InfiniBand standard (in order to ensure network connectivity), to some extent switching matrix 850 can be regarded as a more generic switching device, since it is internal to switch 26 and therefore shielded (at least in part) from other network devices.

The InfiniBand architecture supports two general modes of communication. The first of these is unicast or point-to-point, in which each data packet goes from a single source to a single destination. This translates into switching matrix 850 transferring a packet from one incoming port to one outgoing port. The other mode of communication in InfiniBand is multicast, in which a packet may be routed from a single source to multiple destinations. This is mirrored in the passage of the packet through switching matrix 850, whereby a packet from an incoming port may be directed to multiple outgoing ports.

It is desirable for the switch 26 to have low latency and high efficiency. A low latency implies relatively small amounts of buffering, otherwise delays through the switch will tend to increase. A high efficiency implies that the performance of the switch 26 is not degraded due to competition for resources within the chip as the load (i.e. the traffic through the switch) rises.

As part of the start-up procedure of an InfiniBand network, the subnet manager 34 (see Figure 4) assigns each end node port in a subnet a local identifier (LID). Note that the individual ports 81 in switch 26 are not assigned their own LIDs, although an LID is assigned to port 0 of switch 26, which can be regarded as corresponding to management interface 865. (The switch management port, i.e. port 0, is considered an end node in the InfiniBand network, unlike the other switch ports).

Each LID comprises two portions, a base LID and a number of path bits. The number of path bits in the LID for a given port is determined by the LID mask count (LMC), which is also assigned by the subnet manager 34. Each packet in transit on the subnet contains the LID of the port from which it originated, namely the source LID (SLID), and also the LID for the port to which the packet is going, namely the destination LID (DLID). The SLID and the DLID are incorporated into the local route header (LRH) of the packet.

When a packet is received at its destination, the port checks that the DLID in the packet matches the LID for that port. Note that in this comparison the path bits of the LID are masked out, so that in effect the comparison is made against the base LID for the port. Thus for the purpose of destination checking, the path bits are ignored. However, in terms of routing a packet through a switch, the path bits are taken into consideration. This then allows multiple paths to be specified that all arrive at the same destination port. The ability to provide multiple paths through a subnet to the same destination port aids robustness and reliability within the network.

### 2) Packet Routing through the Switch

Packets arriving at each port of switch 26 must be correctly routed through the switching matrix 850. This is achieved through the use of a routing table (not shown in Figure 10), which contains information about which port 81 of the switch 26 represents the correct route to the ultimate destination of the packet. The routing table includes a list of possible destinations for a packet, each being associated with a port 81 of the switch 26. Packet destinations may include TCAs and management ports within InfiniBand switches.

Figure 10A provides a schematic diagram of the routing of a packet through switch 26. An incoming packet is received at port 81A over link 28A into input buffer 711. It must now be determined how to forward this packet (assuming that the packet is not intended for port 0, i.e. the management interface, on the switch itself). This can be regarded as a two-step process using routing table 1401 and SL-to-VL mappings 1501. (Note that routing table 1401 and/or SL-to-VL mappings 1501 may be provided on a port-by-port basis, or may be maintained centrally within switch 26 for use by all ports, as discussed in more detail below).

Firstly, the destination identifier (DLID) is extracted from the header of the incoming packet, and used to access routing table 1401. The routing table maps DLIDs to output ports. This therefore allows the switch to determine the appropriate output port for the received packet. In addition, the service level (SL) is extracted from the header of the incoming packet, and used to access the set of SL-to-VL mappings 1501 (based on knowledge of the input and output ports for the packet). This allows the switch to determine the appropriate output virtual lane for the received packet.

Accordingly, the received packet is routed from the input buffer 711 of the receiving port 81A through the switching matrix 850 to an output buffer 712 of the transmitting port 81B as determined by the DLID of the packet header. The packet can now be transmitted out over link 28B on a virtual lane appropriate to the SL value of the packet header.

The receiving port 81A may include some scheduling facility (not shown in Figure 10A) to handle the transfer of incoming packets through the switch to the appropriate output ports. For example, an incoming packet may have to be stored temporarily in the input buffer 711 if the desired output buffer is currently occupied. Any such contention delay serves to increase latency through the switch. Note that the scheduling facility may be sensitive to (i.e. influenced by) the desired amount of buffering within switch 26 for any given packet. (Reasons for deliberately buffering at least a portion of an incoming packet within switch 26 are discussed in more detail below).

Figure 10A further illustrates a control link 801 from the receiving port 81A to the transmitting port 81B. In one particular embodiment, the received packet is forwarded to all the other ports on the switch. However, only the specified transmitting port (i.e. port 81B) receives an enable signal over control link 801 that allows the packet to be stored into its output buffer 712. The remaining ports do not receive such an enable signal, and discard the forwarded packet.

Also shown within each port 81 in Figure 10A is a partition key table 1208. The input port 81A extracts the partition key from the header of the received packet and checks that the partition key corresponds to a partition supported by the port. If this is the case, then the packet can be forwarded as described above. However, if this is not the case - i.e. the partition key in the incoming packet does not correspond to a partition supported by the input port - then the packet is discarded without onward transmission from switch 26. An analogous partition key check may also be made at the output port 81B. (In general checks at an output port are less important than checks at an input port, since they will normally relate to a fabric egress point, rather than to a fabric ingress port).

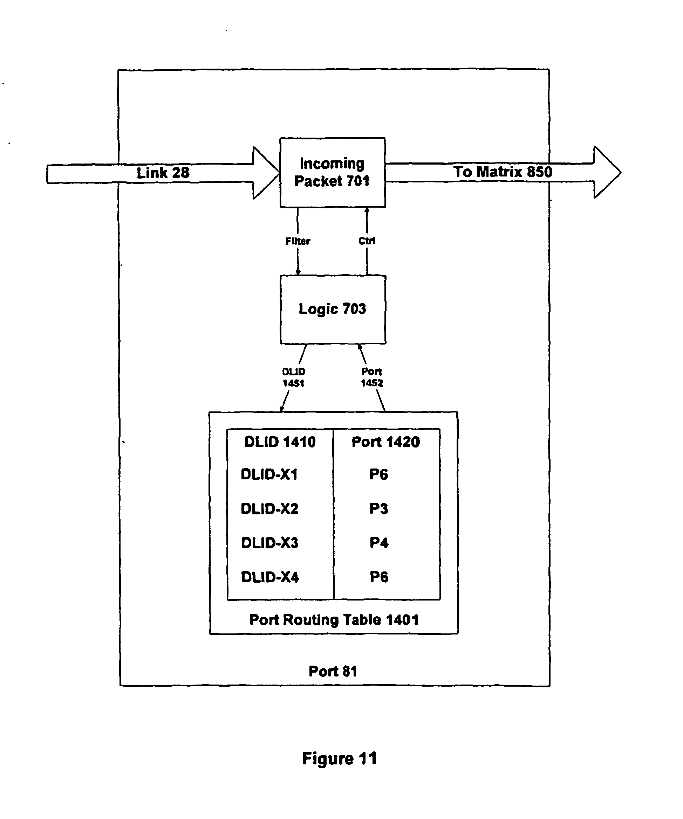

Figure 11 illustrates an embodiment of the present invention in which each port 81 on switch 26 includes its own routing table 1401 in memory (e.g. RAM). This routing table 1401 may be made specific to the particular port 81 in which it is contained. The routing table 1401 can be regarded as having two columns, namely a first column 1410 representing DLID, and a second column 1420 representing port. Routing table 1401 can be indexed by DLID in order to obtain a port number.

In operation, port 81 receives an incoming packet 701 over link 28. The incoming packet 701 may be stored into a buffer or other component as appropriate. The DLID field of the incoming packet is then extracted from the packet header by an appropriate masking or filtering of the packet 701 and passed to logic 703. Note that in some embodiments, in order to maximise speed of processing, the DLID field for a packet may be extracted (and subsequently processed) before the complete packet itself has arrived at the port 81. This then avoids having to wait for the whole packet to arrive before a decision can be made as to where the packet should be routed.

Logic component 703 uses the DLID value 1451 extracted from the incoming packet 701 in order to index into (or otherwise access) port routing table 1401. In particular, logic 703 receives back from port routing table 1401 the port number 1452 that corresponds to the DLID value 1451 extracted from the incoming packet 701. For example, in the particular configuration shown in Figure 11, if the incoming DLID value 1451 equals DLID-X2, then the incoming packet 701 is to be forwarded to Port 3 in the switch. Once logic 703 has determined the port 1452 to which incoming packet 701 should be directed, it performs appropriate control operations to route the packet through the switching matrix 850 to the specified port for onward transmission of the packet from the switch.

In one embodiment, port 81 forwards the packet to the output buffers of all the other ports on the switch. Port 81 also transmits an output buffer select message to the specified destination port, thereby allowing the packet to be stored into the output buffer of this particular port (for forwarding over the network). None of the other ports receives the output buffer select message, and accordingly they discard the forwarded packet.

Entries in the routing table 1401 are inserted via the management interface 865 of the switch 26 using information supplied by the subnet manager 34. The table can be updated via the management interface 865 in response to information describing the addition of new destinations, the removal of old destinations, and alterations to the network resulting in revised routings.

The use of per-port routing tables 1401 within switch 26 helps to reduce latency within the switch. Firstly, the routing table 1401 can be located adjacent the control logic for the port, thereby allowing very quick access. In addition, there is no possibility of contention delays caused by different ports all trying to access a shared routing table at the same time. In addition, if a routing table becomes unavailable at any time (e.g. because the routing information is being updated), then this does not impact all communications through the switch, but rather only communications through the one port that contains the particular routing table that is being updated. (Note that in some embodiments contention controls can be provided at the hardware level to allow a routing table to be updated without interruption in the use of the table for packet forwarding purposes).

In some embodiments, the routing tables 1401 within the ports are copies of one another (i.e. all the routing tables are the same). In other embodiments, however, the routing tables are customised to their associated port. For example, if a port is not included within a route to a given destination node, then the corresponding DLID can be omitted from the routing table for that port. One advantage of this is that it may allow the routing tables 1401 to be reduced in size, since they only need to accommodate a subset of routes through the switch (i.e. the subset of routes relevant to the particular port with which they are associated). In addition, it permits a much greater discrimination of packets within the network, including the ability to detect and remove certain aberrant packets (whether introduced into the network accidentally, for example due to some malfunction, or deliberately to disrupt proper operation of the network). Furthermore, it allows different path selections to be enforced on a per-port basis to the same end destination.

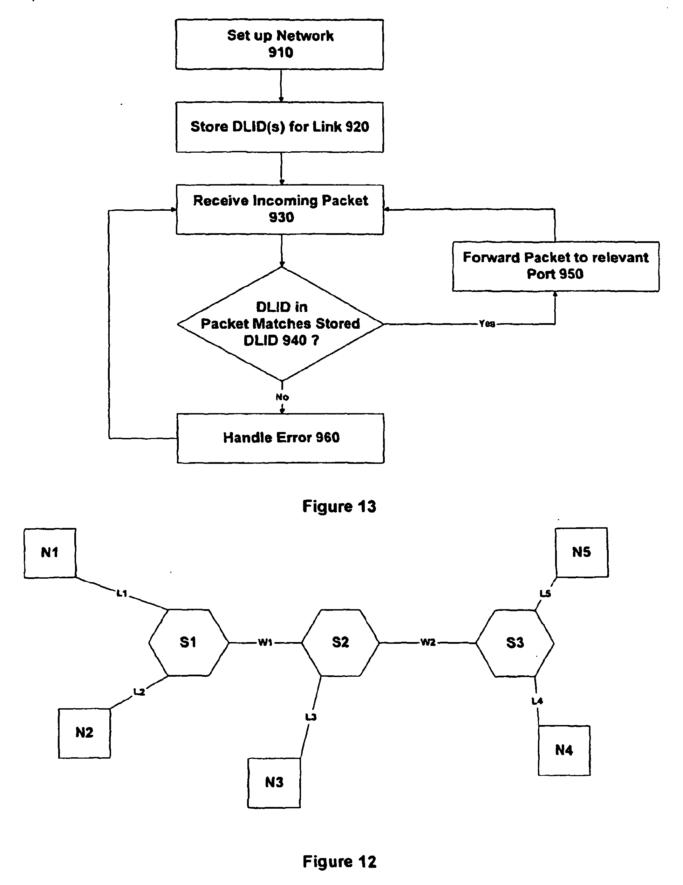

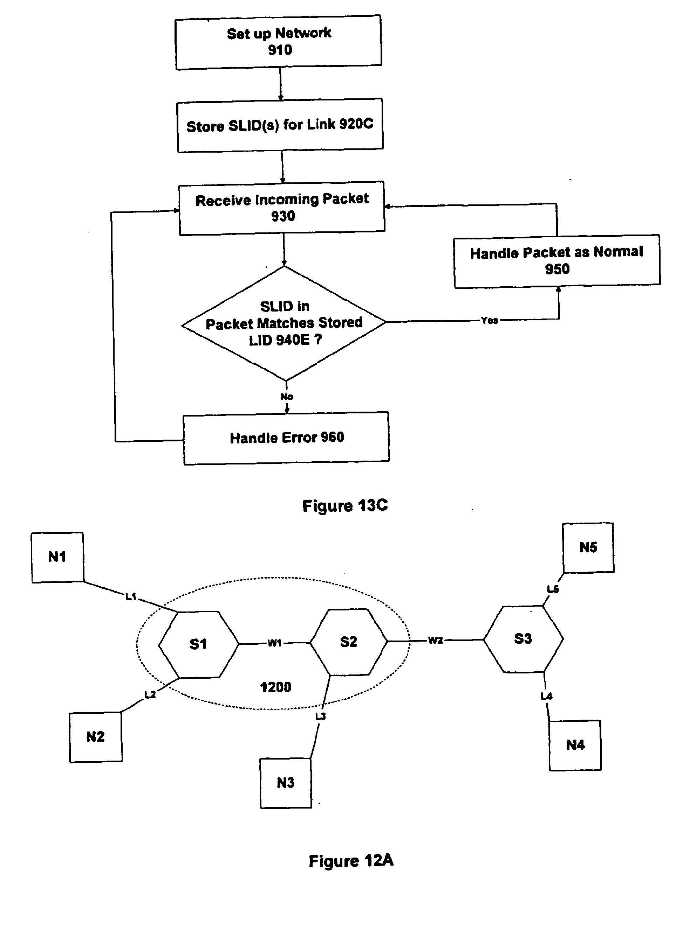

Figure 12 depicts a sample network configuration of a subnet, which includes three switches 26, shown as S1, S2 and S3. Attached to switch S1 are nodes N1 and N2; attached to switch S2 is node N3; and attached to switch S3 are nodes N4 and N5. (It will be appreciated that the subnet shown in Figure 12 represents a rather simple network configuration, and that in practice, the number of nodes and/or switches may be significantly greater than in the diagram).

The various nodes and switches in Figure 12 are connected by the links shown, namely link L1 between node N1 and switch S1, link L2 between node N2 and switch S1, link L3 between node N3 and switch S2, link L4 between node N4 and switch S3, and link L5 between node N5 and switch S3. In addition switch S1 is joined to switch S2 by link W1, and switch S2 is joined to switch S3 by link W2.

One possible form of attack on the network of Figure 12 is a denial of service attack, for example, where node N4 sends a large number of packets to node N1, which are routed via switches S1 and S2 to try to prevent or degrade the operation of node N1. One mechanism provided by existing InfiniBand networks to try to prevent such attacks is the use of partitions, but this mechanism is not available if nodes N1 and N4 (and intermediate switch ports) belong to the same partition. Moreover, even if nodes N1 and N4 are in different partitions, it is possible for packets to traverse the network from N4 to N1 (assuming that the proper LID routing is in place). This is because a P_Key violation caused by the partition mismatch may only be detected at the receiving node (depending on partition support within any intervening switches), and hence the packets may not be discarded until arriving at node N1. However, by this stage the packets will already have consumed network bandwidth, and may also generate noise in the form of excessive traps.

The use of a per-port routing table 1401 helps to avoid the above problems. For example, it may be that the network includes a route from node N5 to node N1, but not from node N4 to node N1. In this situation, the routing table for the port of switch S3 attached to link L5 (and hence to node N5) contains a routing for the DLID corresponding to node N1. In contrast, the routing table for the port of switch S3 attached to link L4 (and hence to node N4) does not contain such a routing for the DLID corresponding to node N1. Packets received at switch S3 from node N4 directed to node N1 are therefore discarded at switch S3, given that there is no onward routing for their DLID. Accordingly, the rest of the network is protected from such (illicit) packets.

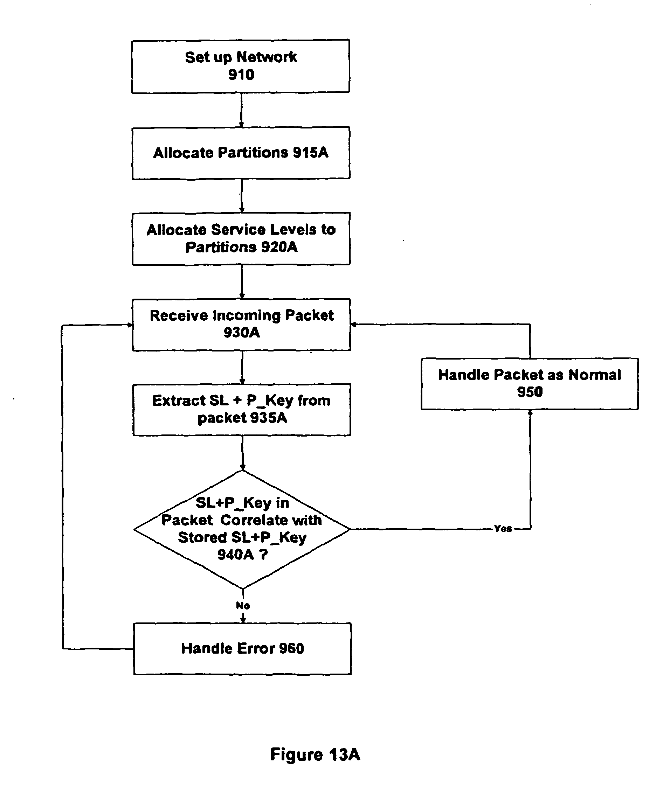

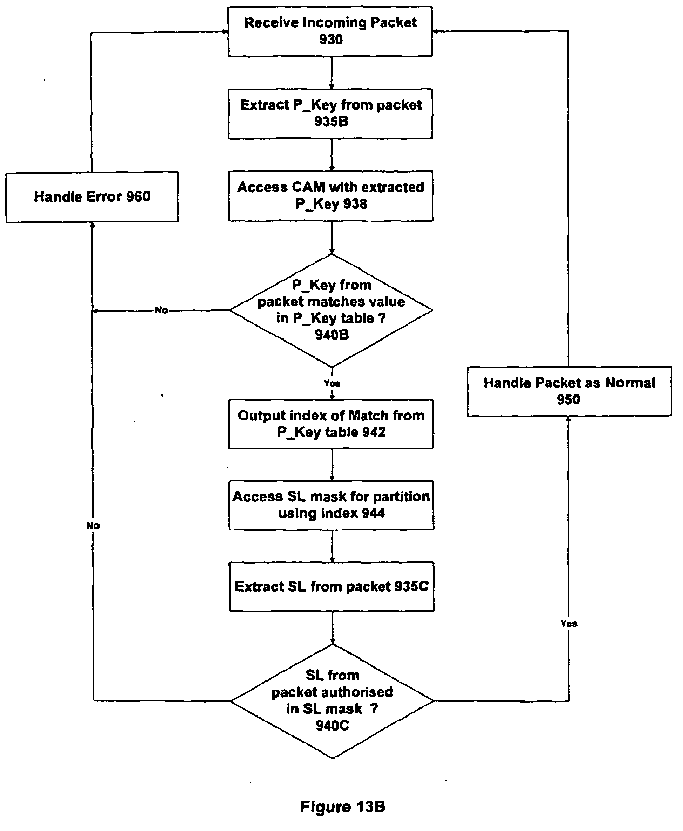

Figure 13 is a flowchart illustrating discarding packet as described above. The method commences with setting up the network (910). As previously discussed, this includes the subnet manager assigning LIDs to the various ports, and creating routes through the network. As part of this set-up, a port receives and stores into routing table 1401 information about the appropriate DLIDs for incoming packets (920) to that port, in other words DLIDs corresponding to routes through that particular port.

The port now receives an incoming packet (930), and the DLID value is extracted. Next, the routing table 1401 is accessed to determine whether or not a forwarding entry is present for this DLID value (940). If so, the packet is forwarded to the relevant port identified in the routing table for this particular DLID value for onward transmission through the network (950). If not, the packet is discarded and any appropriate error handling is performed (e.g. sending a notification to the subnet manager) (960).

There are various possible implementations of routing table 1401. One possibility is to store DLIDs for supported routes, each with a corresponding port number 1401. (This corresponds to the general structure shown in Figure 11). If a particular DLID is not present in the routing table 1401, then it is assumed that the DLID value is not valid for that port.

In another embodiment, the DLID values themselves are not stored in routing table 1401, but rather are used to index into an appropriate port number (i.e. in this embodiment the DLID column 1410 per se can be omitted from routing table 1401, its presence being implicit rather than explicit). In this case, some other mechanism (rather than just absence or presence of an entry in routing table 1401) is used to indicate whether or not a given DLID value is valid for the port. One possibility is to use one or more dedicated control bits to indicate the validity status of a DLID. Another possibility is to use some predetermined (special) port number to indicate an invalid DLID, e.g. port -1 (assuming no real port on the switch has this designation).

One particular option is based on the fact that a single port cannot represent both the ingress and the egress for a given packet. Therefore, a port could store its own port number into routing table 1401 to indicate an invalid DLID. In other words, if the port number 1452 returned for a given DLID 1451 (see Figure 11) represents the port into which the packet has been received (i.e. the port containing the routing table in which the lookup is being made), then it is known that the DLID is not valid for that port, and accordingly an error is raised (corresponding to operation 960 in Figure 13).

One advantage of using a port's own number in this manner to depict an invalid DLID for the port is that it can allow a compact representation of the routing table 1401. In particular, it may be possible to represent an invalid DLID using the same set of bits that are allocated already to indicate the output port in routing table 1401. (This is in contrast to the addition of an extra control bit, which may represent a significant percentage increase on the size of a routing table, e.g. 25%).

The use of per-port routing tables permits the provision and enforcement of different routes for the same destination as a function of source node (or more particularly, the ingress port into the switch). This avoids end nodes having to set up and adhere to complicated multiple routings based on LMC bits in the destination identifier.

Although the embodiments described so far have had a routing table 1401 in each port, in other embodiments a central shared location within the switch may be used to store a set of port-specific routings (rather than distributing them around the various ports). In this case, a port accesses the routings that are specific to itself in making a forwarding decision (e.g. the routings might be indexed by port number). This shared approach may be especially attractive if the majority of DLID mappings are common to all ports (and so only need to be stored once in the switch 26), with only a subset of DLID mappings being port-specific.

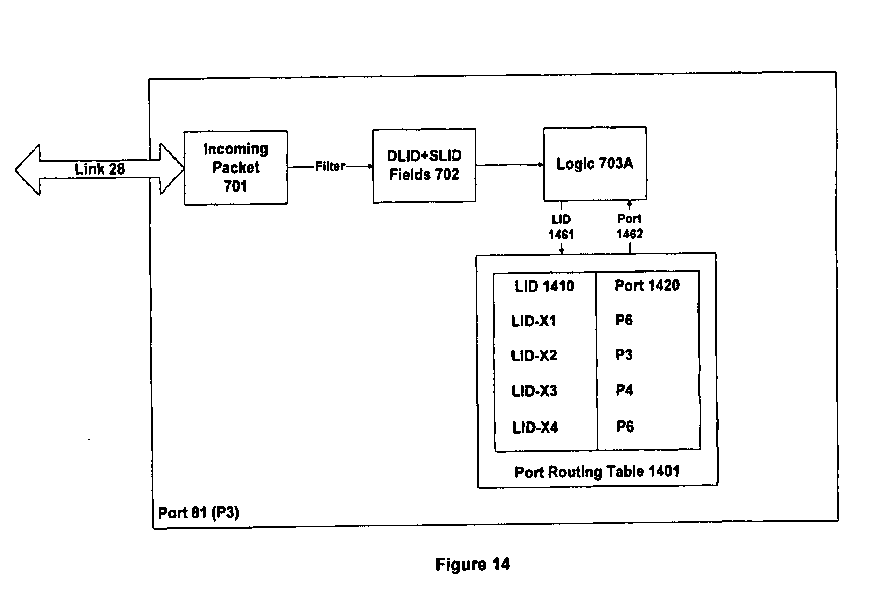

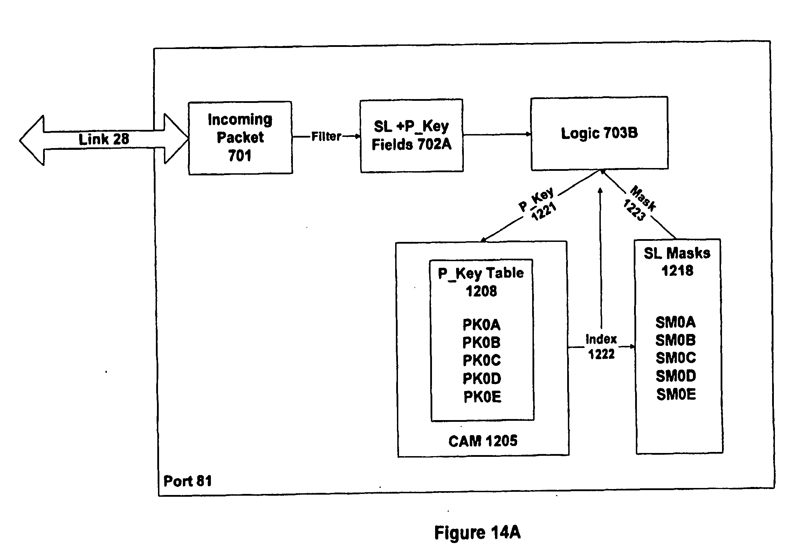

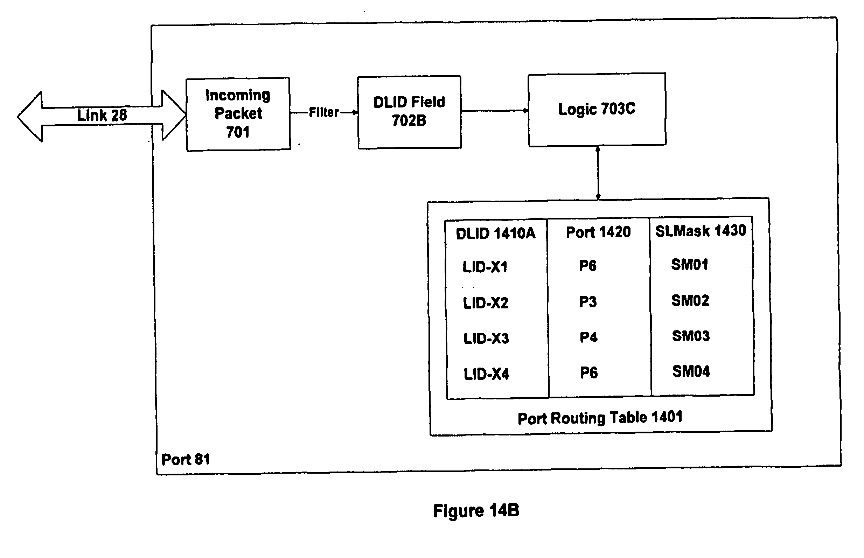

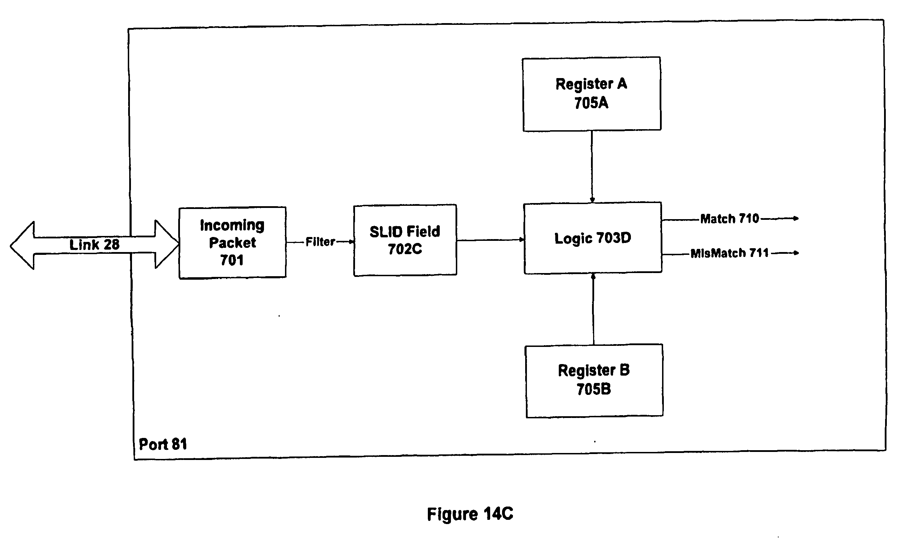

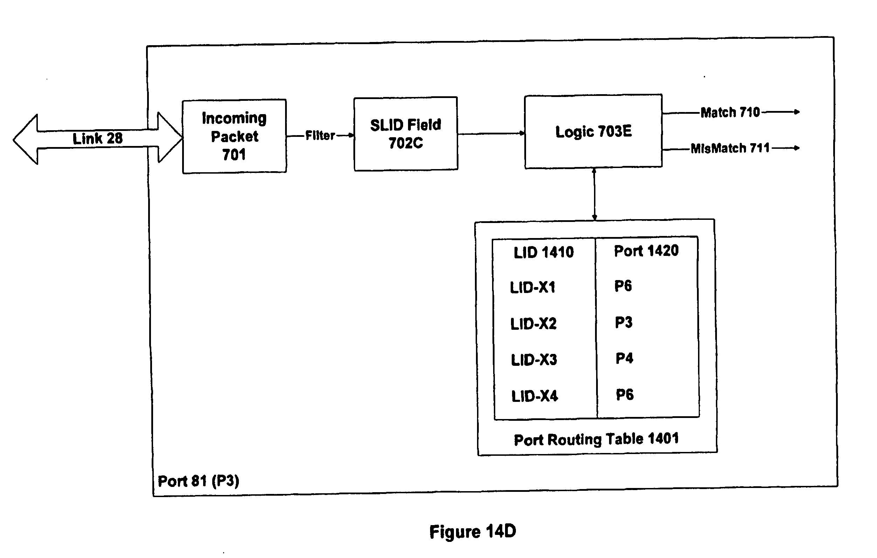

Figure 14 illustrates another embodiment of the invention, in which routing table 1401 is not only used for determining how to forward a packet, but also for verifying the SLID of an incoming packet. In this embodiment, an incoming packet 701 is received and the SLID and DLID fields 702 are extracted by any suitable mechanism (e.g. masking, filtering, and so on). Logic 703A within port 81 now uses the extracted SLID and DLID fields to access port routing table 1401.

Conceptually, for any given port 81, LID space can be divided into two portions. The first corresponds to LIDs for nodes on the external (link) side of the port. The second corresponds to LIDs for nodes on the internal (switch) side of the port. It will be appreciated that an external LID represents a valid SLID, but not a valid DLID, while an internal LID represents a valid DLID, but not a valid SLID (for that particular port).

Accordingly, the LID values 1410 in port routing table 1401 cover both the internal and external ranges of LID values. Each LID value 1410 has a corresponding port value 1420. Associated with the external LID values are the port numbers for onward transmission, as in the routing table of Figure 11. Associated with the internal LID values (i.e. with LIDs corresponding to an acceptable SLID) is the port number for the port itself, in other words the port that owns routing table 1401.

Routing table 1401 can therefore be used for two different tasks in port 81. The first represents a determination of the port to which a particular incoming packet 701 should be forwarded. In this case, a look-up is performed based on the value of DLID in the incoming packet. In addition, routing table 1401 will also be consulted when the SLID is to be verified, in which case the look-up is performed based on the value of SLID in the incoming packet.

When the DLID lookup is performed for routing purposes, then an acceptable result is the port number for any port other than the port that owns table 1401. Conversely, for SLID authentication, the only acceptable result is the port number corresponding to the port that owns table 1401. This then reflects the split of LID space between external values (for SLID verification) and internal values (for DLID routing). If a DLID lookup does return the port number corresponding to the port that owns table 1401, this represents an error, i.e. a failed routing, and the packet is discarded (corresponding to operation 960 in Figure 13). Likewise, if an SLID lookup does not return the port number corresponding to the port that owns table 1401, this also represents an error, and so implies failure of the SLID authentication. Again, such failure will cause the packet to be discarded, and may also cause an error notification to be raised.

In the particular example shown in Figure 14, it is assumed that port 81 corresponds to port P3. In this case, only the LID range identified as LID-X2 in table 1401 would represent a valid SLID, while LID ranges LID-X1, LID-X3, and LID-X4 would all represent invalid SLIDs. Conversely, LID-X2 would represent an invalid DLID, but any of the other LID ranges in table 1401 would represent valid DLIDs.

Note that there may be some LID values that do not correspond either to a valid DLID or to a valid SLID. For example, some LID values may not be assigned within the network 12 (or may not have routes associated with them). In addition, as previously mentioned, switch 26 may have its own LID range corresponding to port 0 (the management interface). These LID ranges can then be assigned special port numbers in the routing table 1401, e.g. port -1 for an unassigned LID value, and port 0 for the LID range of the management interface. In general these special port values do not represent a valid SLID or a valid DLID, and have to be specially handled.

Although the embodiment of Figure 14 utilises a combined DLID/SLID lookup table 1401, in another embodiment separate lookup tables could be provided for DLID and SLID. The SLID lookup table would then operate as described above, namely for any given input LID value it would return a result indicative of whether or not that LID represented a valid SLID.

### 3) Service Level Verification

The InfiniBand specification generally assumes that the InfiniBand fabric is secure. Hence the main security focus is on controlling which ports can communicate, and what packet traffic can be initiated by end ports in the fabric. This can lead to an exposure to certain problems, whether caused accidentally (e.g. by failed hardware or a software bug) or deliberately (e.g. by a hacker).

For example, existing networks perform only limited checking of the service level (SL) value within a packet. In particular, a port only checks that the SL value in an incoming packet corresponds to a virtual lane (VL) in the SL-to-VL mapping for the outward link on which the packet is to be forwarded. If this is not the case, then the packet is discarded because there is no virtual lane over which it can be forwarded. This check is therefore based solely on the SL-to-VL mappings, and so is dependent only upon the SL value in an incoming packet, the port at which the packet is received into the switch, and the port from which the packet is to be forwarded from the switch.

This level of checking may not be sufficient for averting all network problems. For example, a node may (accidentally or deliberately) assign its outgoing packets an inappropriately high SL value, which causes the network to treat the packets as high priority traffic. As a consequence, the network may suffer a loss of performance with respect to other traffic, including increased delays (latency) and limited capacity (bandwidth).

Accordingly, one embodiment of the invention allows a partition to be assigned one or more permitted SL values. The switch 26 then confirms for each received packet that the SL value in the incoming packet matches or correlates with an SL value permitted for the partition in which that particular packet is being transmitted (as determined by the P_Key value in the packet). If the packet does not have an appropriate SL value, it can be discarded, thereby avoiding disruption to network performance.

Figure 13A depicts a flowchart for checking the SL value in a packet in accordance with one embodiment of the invention. The method commences with setting up the network (910), which includes allocating partitions to the port (915A). This generally involves populating P_Key tables for the nodes in the network. A P_Key table indicates whether or not a given port is a member of a particular partition, and also whether it is a full member or just a limited member of that partition. It will be appreciated that allocating partitions in this manner is part of existing InfiniBand systems, and so will be familiar to the skilled person.

The method now continues to allocate one or more service levels to the various partitions that have been set up (920A). This involves specifying which service level(s) may be used for communications within a given partition. The assignment of service levels in respect of partitions is generally made by a subnet manager 34 (see Figure 4), based on policy input from the same source as provided policies for assigning the partitions to ports.

It will be appreciated that the InfiniBand specification does not recite any explicit relationship between service level and partition, except that both may be specified for a port (but not in correlation with one another). It is also suggested in the InfiniBand specification that certain service levels are assigned to certain partitions to provide quality of service control. However, this represents a user allocation of resources, rather than an underlying packet authentication approach.

Once the set-up operations 910, 915A and 920A have completed, a port receives an incoming packet (930A). The P_Key value and the SL value are extracted from the packet header (935A). This then allows the P_Key value to be checked in the P_Key table (as for known implementations) in order to ensure that the incoming packet belongs to an allowed partition. In addition, it is confirmed that the SL value in the packet header is permitted for the partition identified in the packet header (940A). In other words, the system checks that the SL value in the packet matches one of the service levels allocated to the partition at operation 920A.

If the P_Key and SL values are validated, then the packet is accepted (950) for further processing, i.e. passed to the appropriate output port for the destination node. However, if the validation fails, either because the packet belongs to a partition not supported by the port, or because the packet specifies a service level that is not appropriate to the partition on which the packet is travelling, then an error results (960). In this case, the packet is discarded, and an error may be transmitted to the subnet manager. Note that the exact processing for error handling at operation 960 may vary according to the type of error, namely whether there was a P_Key violation or an SL violation. In one embodiment, the default behaviour for an SL violation is to mirror the behaviour for a P_Key violation (as described in the InfiniBand specification).

It will be appreciated therefore that the approach of Figure 13A allows the service level (SL) of a packet to be correlated with the partition to which the packet belongs (as determined by its P_Key value). This is to be contrasted with existing systems that perform a validation of the P_Key value, and also of the SL value (to the extent that the SL value maps to an appropriate VL value) but do not perform any correlation between SL and P_Key. The approach of Figure 13A therefore provides a much greater granularity and sensitivity of control on the usage of service levels within the network, and so is more likely to detect and avert network problems in this regard than existing implementations.

Figure 14A illustrates an implementation of a port 81 to support the processing illustrated in Figure 13A in accordance with one embodiment of the invention. In the embodiment of Figure 14A, the port receives an incoming packet 701 over link 28. Incoming packet 701 may be stored into a buffer or other component as appropriate. The SL field and the P_Key field 702A are then extracted from the packet header of the incoming packet 701 by an appropriate masking or filtering. Note that in some embodiments, in order to maximise the speed of processing these fields may be extracted (and subsequently tested) before the complete packet has arrived at the port 81. This avoids having to wait for the whole packet to arrive before a decision is made as to whether or not the SL field and the P_Key field are correct.

Port 81 further includes a logic unit 703B. The logic unit 703B takes the P_Key value extracted from the incoming packet 701 and accesses a content addressable memory (CAM) 1205 on the basis of this P_Key value 1221. The CAM 1205 incorporates a P_Key table 1208, which contains all the partition keys that are valid for that port. For example, in the particular embodiment shown in Figure 14A, port 81 is included in partitions PK0A, PK0B, PK0C, PK0D, and PKOE.

If the received partition key 1221 matches one of the values in the P_Key table 1208, then CAM 1205 detects a hit, implying that the incoming packet 701 belongs to a partition supported by port 81. In this case, the CAM 1205 outputs an index value 1222 representing the location of the matched P_Key value in P_Key table 1208. On the other hand, if no match is found, then the incoming packet 701 does not belong to a partition supported by port 81 and so must be discarded (i.e. corresponding to operation 960 in Figure 13A). This failure may be indicated by the absence of an index signal 1222, or by some predetermined special index value (such as -1). Alternatively, the CAM 1205 may support a specific mechanism (not shown in Figure 14A) to indicate such a failure to logic 703B.

Assuming that the P_Key value 1221 from the incoming packet 701 does correspond to a value in the P_Key table 1208, a test is now made to determine whether or not the SL field in the incoming packet 701 is appropriate for the partition to which the incoming packet belongs. In order to make this test, port 81 includes a table of SL masks 1218. The masks are illustrated schematically in Figure 14A as SM0A, SM0B, SM0C, SM0D, and SM0E.

Note that the position of each mask in table 1218 corresponds with the position of its associated partition in P_Key table 1208. In other words, an SL mask having an index value of N in the SL mask table 1218 corresponds to the partition having a partition key with index N in the P_Key table 1208. Consequently, once an index value 1222 for the incoming packet 701 has been determined from P_Key table 1208, this index value can be passed to the SL mask table 1218 in order to locate the SL mask for that particular partition. The relevant SL mask 1223 can then be returned to logic 703B for authentication of the SL value in the incoming packet.

In one embodiment, an SL mask 1222 is implemented as a 16-bit mask. Each bit in the SL mask corresponds to one possible service level, and is used to indicate whether or not that particular service level is supported for the partition associated with the SL mask. For example, a mask bit value of 0 could indicate that the partition does not support this service level, while a value of 1 could indicate that the partition does support this particular service level. It will be appreciated that this approach for defining an SL mask allows a partition to support any arbitrary combination of service levels.

In one embodiment, a default bit mask is defined that allows a partition to receive any service level. With the above configuration, such a bit mask would contain all 1s. Such a default would then be consistent with existing implementations that did not correlate service level with partition (and so avoid the need for any "mode flag" for subnet managers that were not aware of this feature).

Once logic 703B has received SL mask 1223 for the incoming packet 701 (i.e. the SL mask corresponding to the partition key included in the incoming packet 701), it can use this mask to verify the SL value in the incoming packet 701. In particular, logic 703B can determine the value of the SL field in incoming packet 701, and use this value to access the corresponding bit within SL mask 1218. For example, if the SL value in the packet is 4, then logic 703B can access the bit in position 4 within SL mask 1223. More generally, if the SL value is N, logic 703B accesses the bit in position N within the SL mask. The incoming SL value is then accepted or rejected depending upon the mask setting. For example, if the mask has a value of 0 in the bit position corresponding to the received SL value, then assuming the above polarity, this indicates that the SL value in the received packet is not supported by the partition. Accordingly, an error results, corresponding to operation 960 in Figure 13A. Alternatively, if there is a 1 in the relevant location of the SL mask 1223, then the SL value from the received packet is indeed supported for the partition to which the packet belong. Hence the packet can be processed normally, corresponding to operation 950 in Figure 13A.

Figure 13B is a flowchart showing certain operations from the flowchart of Figure 13A in more detail, as may be implemented within the embodiment of Figure 14A. Note that for clarity, the set-up operations from Figure 13A are omitted from Figure 13B. Accordingly, the processing of Figure 13B commences with receipt of an incoming packet (930). The P_Key value of this packet is extracted (935B) and used to access (938) a CAM containing a P_Key table 1208. If no match for the extracted P_Key value 1221 is found in the P_Key table 1208 (940B), this represents a partition violation, and consequently an error is flagged (960). (It will be appreciated that P_Key checking per se in accordance with operations 935B, 938, and 940B is performed in existing systems).

If no P_Key violation is found, then we take the positive outcome from operation 940B, leading to the output of index 1222, which represents the partition in the P_Key table 1208 that matched the P_Key value received from the incoming packet (942). This index is then used to access a table 1218 containing the SL bit masks for each partition (944). Using the index value 1222, the particular SL mask 1223 for the partition to which the incoming packet belongs can be identified and retrieved.

The SL value is now extracted from the incoming packet (935C) (unless this has already been done, perhaps at operation 935B, when the P_Key value was extracted). The bit position in the SL mask 1223 corresponding to the extracted SL value is then accessed, and the packet is accepted or rejected in accordance with the setting of the bit in this position (940C). In particular, if the bit has one predetermined value, the SL value is permitted for the partition, and so the packet is allowed to be forwarded as per normal (950). However, if the bit has the opposite value, this indicates that the SL value is not permitted for the partition to which the packet belongs. Accordingly, the packet is rejected, and appropriate error handling is performed (960).

It will be appreciated that the SL mask table 1218 in the embodiment of Figure 14A has (approximately) the same size as the P_Key table 1208, since both contain one 16 bit value for each partition supported by the port. In some other embodiments, P_Key table 1208 may be implemented using a bit mask having one bit for each potential P_Key value, to indicate whether or not a port is a member of the relevant partition. The size of such a P_Key table would be 8 Kbytes (1 bit for each of 64K possible keys). (This is larger than the size of P_Key table in Figure 14A, since the number of partitions supported by any given port is likely to be only a small proportion of the total number of possible partitions, but it does avoid the use of content addressable memory, which may be desirable for design reasons).

In such an embodiment having a P_Key table in the form of a bit mask, service level can be correlated with partition by again associating an SL bit mask with each partition. Note however, this would significantly increase the size of the P_Key table in order to accommodate a 16-bit SL mask for each partition key (or require storage of a separate SL mask table of this size).

Figure 14B illustrates an alternative embodiment of the invention, in which service level is correlated with the destination LID (DLID) for a packet, rather than with the partition (P_Key). In the embodiment of Figure 14B, each port 81 is provided with its own routing table 1401. The table shown in Figure 14B has three columns, namely a DLID column 1410A, a port column 1420, and a SL Mask column 1430. In the particular embodiment illustrated, the DLID column 1410A contains a set of DLID values (LID-X1, LID-X2, etc), each of which is associated with a corresponding port number (P6, P3, etc), and a corresponding service level (SM01, SM02, etc). For example, a DLID value of LID-X2 is associated with port P3 and mask SM02.

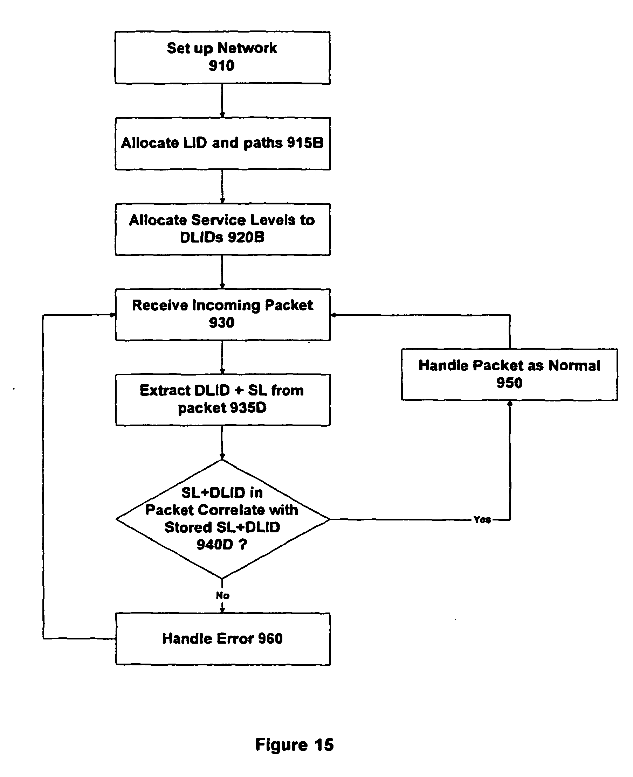

The operation of the embodiment of Figure 14B is illustrated in the flowchart of Figure 15. The method commences with setting up the network (910), as previously described in relation to Figure 13A. As part of the set-up, local identifiers (LIDs) are allocated to the various network nodes, and paths through the network are defined (915B). In the context of the embodiment of Figure 14B, this involves populating the DLID column 1410A and the port column 1420 of routing table 1401. (It will be appreciated that the set-up of paths through the network is already performed as a conventional part of an InfiniBand network, although existing systems have used a node routing table shared between ports rather than individual port routing tables).

The constraints on service levels within the network are now imposed (normally by a subnet manager 34). However, rather than correlating service levels with partitions (as in the approach of Figure 13A), this time the service levels are correlated with DLIDs (920B). In other words, for a given port in the network, packets arriving at that port directed towards a given destination (i.e. having a given DLID value) are specified as limited to one or more service levels (920B). In the embodiment of Figure 14B, this is achieved by populating the SL Mask column 1430 of routing table 1401 with an SL mask value for each DLID specified in routing table 1401. Each SL mask can be represented by a 16-bit value, where each bit corresponds to one of the 16 possible service level values and may be set to a default value, as previously described.

Once the DLIDs in routing table 1401 have been allocated an SL mask, the port receives an incoming packet (930). The DLID value and the SL value are extracted from the packet header (935D). The DLID value is used to index into routing table 1401, thereby allowing a corresponding port and SL mask to be identified. The SL value extracted from the packet header can then be verified against the SL mask appropriate for packets directed towards that DLID (940D). (This verification can be performed, for example, as previously described for the embodiment of Figure 14A). If the verification is successful, the packet contains an SL appropriate to its DLID value, and so can be handled normally (950) - i.e. it can be forwarded to the port corresponding to the DLID value as specified in column 1420A. However, if the SL value from the packet is not verified against the relevant SL mask, then the packet is discarded and any appropriate error processing is performed (960).

Although the embodiment of Figure 14B is based on a per-port routing table, it will be appreciated that correlating SL values with DLIDs could also be performed with a per-node routing table. However, the granularity of control is reduced in this case, since now the SL value cannot be controlled on a per port basis.

Any given network may support SL correlation against partitions and/or DUDs, depending on the particular circumstances of the network. For example, it may be known that certain end-nodes in the network have a low level of priority (compared to other nodes in the network). In this case, it may be appropriate to restrict packets having a DLID value corresponding to such end-nodes to a low priority SL value. In other circumstances, it may be known that a particular partition in the network should have a low level of priority. Again, it may then be appropriate to restrict packets in this partition to a low priority SL value. Note that some implementations may support SL correlation against both partition and also against DLID. In this case the SL value checks of Figures 13A and 15 would both be performed.

In some implementations, it may not be necessary to specify an explicit set of acceptable SL values for every single partition. Rather, if no SL values are specified for a partition, then this might be interpreted as indicating that any SL value is acceptable for that partition. Another possibility is that a set of default allowed SL values is defined as previously discussed, and this set of default SL values is utilised for a partition unless otherwise indicated. Analogous considerations apply with respect to correlating SL values to DLIDs.

### 4) Cut-Through Routing

An important aspect of switch performance is latency. The larger the amount of buffering within switch 26, the greater the end-to-end delay across the network. For example, if data is being transmitted at a bit rate of 2.5 GHz, then each byte buffered within the switch increases latency by 3.2ns. If a complete packet of size 2Kbytes is buffered, then this introduces a latency of over 6.5 µs. The latency will be further increased if the link supports multiple virtual lanes (since this reduces the effective bit rate of the link), and/or if the packet has to pass through multiple switches in the network (since latency is cumulative through the network).

One known way to reduce latency is to perform cut-through routing, which does not store and forward complete packets. Rather, once the appropriate destination for an incoming packet is identified from the packet header, then onward transmission of the packet commences, despite the fact that the complete packet may not yet have been received at the switch.

In the context of Figures 10A and 11, cut-through routing involves at least the initial portion of a packet header for incoming packet 701 being received into input buffer 711. Once the DLID and SL values have been extracted from the received portion of the packet, the routing table 1401 and the SL-to-VL-mappings 1501 can be consulted to determine the appropriate output port. Accordingly, the incoming packet can now be directed from the input port 81A through switching matrix 850 to output port 81B, and onward transmission can commence from output port 81B, despite the fact that not all of the packet has yet arrived at switch 26. (As these remaining portions of the packet do arrive, they follow the same path through and out of the switch as the initial portions).

Note that the information needed to determine the onward routing of a packet (the DLID and SL values) occurs in the packet header, which comprises no more than 126 bytes, whereas the body of an InfiniBand packet may contain up to 4Kbytes. Accordingly, cut-through routing greatly reduces the amount of a packet that is buffered in a switch (e.g. 126 bytes against 4Kbytes). Indeed, there is no particular need to buffer the complete packet header, only the portion up to the DLID and SL values (since prior to receipt of these values, the output routing cannot be determined).

Although cut-through routing is highly effective at reducing latency in the network, it does have a couple of potential drawbacks. One of these is the possibility that the output buffer may become exhausted during onward transmission of the packet from the switch. Such exhaustion arises when there is a transmit space on the outgoing link, but the next portion of the packet to be transmitted is not yet available in the output buffer (usually because it has not yet, or only very recently, been received at the switch). This might be caused by different clock rates at different nodes in the network (resulting in a mismatch between packet reception rate and packet transmit rate). In these circumstances, one possibility is to transmit one or more idle characters on the link until the next packet data is ready for transmission. However, this does not make good use of network bandwidth. Accordingly, a system with cut-through routing may try to ensure that there is sufficient buffering of data prior to starting onward transmission to avoid buffer exhaustion. This then allows the intended onward link for the buffered data to be used for some other data transmission until the desired amount of buffering has been achieved, thereby helping to make the best use of network bandwidth.

In one particular embodiment of the invention, allowance is made for the fact that there may be different data rates on the incoming and outgoing links. For example, the incoming link may comprise a single 2.5 GHz lane, while the outgoing link may comprise multiple 2.5 GHz lanes. In this situation, onward transmission of the packet may be delayed until enough of the packet is buffered to avoid exhaustion of the output buffer during cut-through routing. The greater the data rate available on the outgoing link compared to the incoming link, the more buffering needs to be employed (since once onward transmission of the packet has commenced, the buffering will be depleted of outgoing data at a much greater rate than it is replenished with incoming data).

Another potential drawback with regard to cut-through routing concerns packet authentication. Thus as explained above, the P_Key of each incoming packet is validated in partition key table 1208. However, with cut-through routing the result of this validation may not be available until after the onward transmission of the packet has already started. Consequently, if the partition key validation fails, only the remaining portion of the packet can be discarded; the portion of the packet that has already been transmitted out from the switch is not affected. In other words, the invalid (truncated) packet will continue to traverse the network.

This situation does not conflict with the InfiniBand specification, since the invalid packet will still be discarded at its final destination due to partition key failure. However, transmitting the invalid packet through the network to the final destination wastes network bandwidth, and so reduces performance and capacity for other traffic on the network. In addition, the truncated packets will cause downstream nodes to perform further exception handling, thereby wasting processing resources at these other nodes.

Note that the presence of an invalid packet on the network may be caused accidentally, such as by the failure of a piece of hardware or a software bug. Alternatively, the invalid packet may be introduced deliberately by an adversary trying to disrupt the network for some reason. In either case, it is desirable that the network should be as robust as possible against invalid packets, so that they do not degrade the network for legitimate traffic.

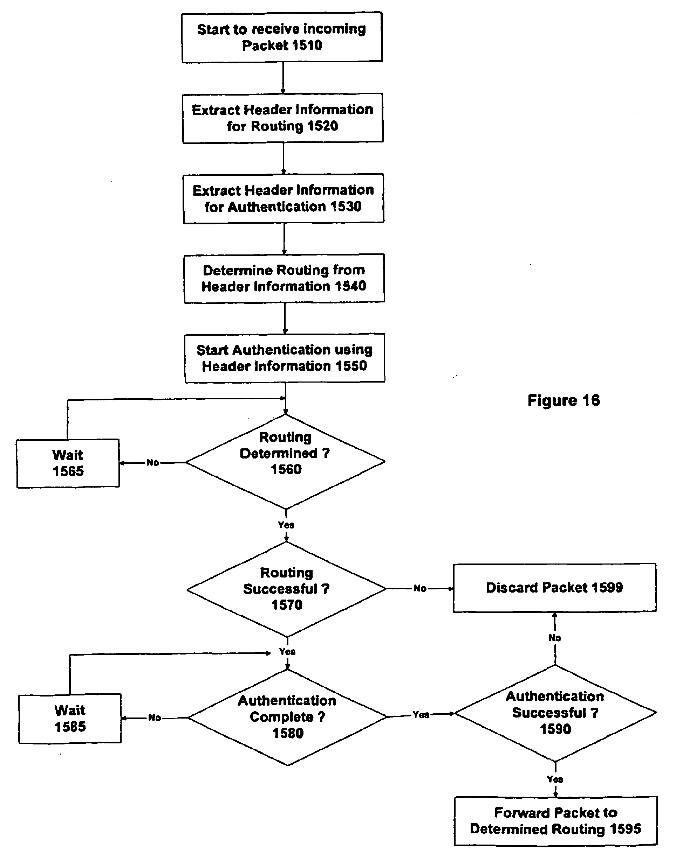

The above situation is addressed by the flowchart of Figure 16. Processing commences in the flowchart by a packet starting to arrive at a port 81A of a switch (1510). The packet header starts to arrive first. Various fields are extracted from the packet header to determine where to route the packet (1520) and to perform authentication (authorisation) of the packet (1530). For example, in an InfiniBand implementation, the fields extracted to perform the routing are the DLID value and the SL value, while the authentication may be performed on the basis of the P_Key value (as described above). Note that additional fields may be utilised for authentication checks, as discussed in more detail below. It will be appreciated that the various fields may be extracted all at the same time (if input buffer 711 has sufficient capacity), or accessed in any appropriate order - normally the order in which the various fields are received into input buffer 711 (it depends in turn on the predefined structure of the packet header).

As soon as the relevant fields have been obtained, the onward routing of the packet can be determined (1540), and any authentication checks can be started (1550). Again, it will be appreciated that the order of these operations will generally depend upon the availability of the relevant data, and may not exactly match that shown in Figure 16. For example, it may be that the onward routing can start to be determined from extracted routing information prior to receipt (and extraction) of information needed for a particular authorisation check.

In an InfiniBand network, the onward routing can start to be determined once the DLID field is available (it also needs the SL field to complete, as described above). The authentication check can be started once the P_Key value is available. If any other authentication checks are to be performed, they can be started once the relevant fields have been extracted from the packet header.

Note that in general, if multiple authentication checks are to be performed, these will be executed in parallel. As will become apparent below, this helps to minimise latency through the switch. However, in some implementations there may be design reasons why certain authentication checks are performed sequentially (e.g. limited processing power at a port).

Similarly, the authentication checks may be performed in parallel with the routing determination, or sequentially. As a general rule, priority is given to completing the routing determination (compared to authentication), thereby allowing the appropriate output port to be selected as part of the cut-through routing (although this is again dependent upon the structure of the packet header).

It is now determined whether the route determination has completed (1560); if not, processing waits (1565) until this has occurred. A check is made to see whether or not the (completed) routing determination was successful (1570). If not, then the received packet is discarded without forwarding (1599). This may cause some error notification to be raised (e.g. to the subnet manager 34). Note that a routing failure may occur for example if there is no VL mapping in the switch corresponding to the SL value in the received packet for the port from which the packet is to be transmitted.

Assuming however that the routing is successful, the system now waits until the authentication checks are complete (1580, 1585). If the authentication is unsuccessful (1590), then the packet is discarded (1599). Again, this may cause some error notification to be raised. On the other hand, if the authentication is successful, then the packet can be forwarded from the relevant output port (1595). Note that such forwarding does not occur until all the authentication checks are complete (i.e. operation 1580). Accordingly, there is no possibility of forwarding (a portion of) a packet that is later found to be invalid. On the other hand, once the authentication check(s) is/are complete, then forwarding of the packet can start at operation 1595 without waiting for the entire packet to arrive. In other words, cut-through routing to reduce latency is still supported, but without the risk of disrupting the network by forwarding invalid packets.

It will be appreciated that if there are multiple authentication checks, then as long as they are all successful, the wait at operation 1585 is until all the checks have completed. However, if any of the authentication checks fails, then processing can proceed directly to operation 1599 (discarding packet), since it is immediately known that the packet is invalid, without waiting for the result of any other pending authentication checks. (The results of any such other checks may still be of interest for network management purposes, but they do not impact the decision at operation 1590 not to forward the packet).

It is also possible that the results of one or more authentication checks become available prior to the routing being determined. Any authentication checks that complete successfully prior to determination of the routing do not impact the operations described above. In other words, after the routing has been successfully determined (operations 1560, 1570), the status of the authentication check(s) is assessed (operation 1580). If the authentication check(s) completed early (i.e. prior to route determination), then there is no need to wait (at operation 1585) for this assessment. On the other hand, if any authentication check fails prior to determination of the routing, we can progress directly to operation 1599 (discarding packet) without having to wait for the routing to be determined, since it is now known that the packet is not to be forwarded from the switch.

In some other cases, the authentication checks may depend upon the routing determination (i.e. the authentication check is path-sensitive). In such a situation, it may be necessary to wait for the routing determination to complete at operation 1560 prior to performing the authentication at operation 1550.

It will be appreciated that the approach of Figure 16 introduces a delay into the cut-through routing. This delay is correlated or matched to (i.e. dependent upon) the timing of the authentication checks, and is sufficient to allow these checks to complete, thereby ensuring that no portion of an unauthorised packet is forwarded from the switch. On the other hand, the cut-through routing will generally proceed as soon as possible after the authentication checks have completed, in order to minimise latency through the switch.

In some circumstances, there may be a separate delay imposed on the cut-through routing independent of the authentication checks, for example in relation to the timing or speed matching issues discussed above. In this case, the total delay applied to the cut-through routing will correspond to whichever is the largest of these separate delays.

One further potential source of delay in switch 26 is due to contention between packets when the traffic rate through the switch becomes large (approaches the maximum capacity of the switch). It will be appreciated that unlike a deliberate delay for authentication (or speed matching), a contention delay is something that arises because of (unpredictable) traffic conditions. It is possible therefore that contention within the switch may lead to enough buffering to ensure completion of the desired authentication check(s). However, this cannot be relied upon in general, since any contention delay should disappear (go towards zero) in low traffic conditions.

In general, there are two possible configurations regarding the wait at operation 1585 of Figure 16. In one configuration, the timing of the authentication checks is deterministic. In other words, it is known that such checking will require a certain number of machine operations or clocks cycles (this could be regarded as synchronous operation). For example, consider the P_Key authentication check in the embodiment of Figure 10A. The P_Key table 1208 can be implemented using content addressable memory (CAM). A partition key authentication is performed by providing the P_Key value extracted from the incoming packet header to the CAM, and determining whether or not a match is obtained.

Since the number of operations and hence the time period needed to complete such an authentication check is known in advance, the amount of buffering corresponding to this time period can be determined. Accordingly, switch 26 can be configured to ensure that cut-through routing does not occur (i.e. onward transmission of the packet does not commence) until at least this predetermined amount of the packet is buffered into switch 26. Note that this buffering can be performed in input buffer 711 or output buffer 712 as appropriate (or in any desired combination of these two). In this approach the delay setting is implicit, given the required amount of buffering. In other words, a minimum amount of buffering is specified to ensure that the authentication checks complete prior to onward transmission of the packet, and hence no invalid packets are forwarded from the switch. In some circumstances, the amount of buffering employed may be greater than this minimum. Although this will increase latency, it may be needed for other reasons - e.g. the timing issues discussed above. (The amount of buffering here reflects the amount of data that is to be buffered, rather than the physical size of the buffers per se; the input/output buffers must clearly be large enough to accommodate the desired amount of buffering).

The second possible configuration could be regarded as asynchronous or non-deterministic. For example, consider that the partition key table storing each supported partition key for the port is implemented in conventional memory (rather than content addressable memory), and the partition key check is performed by accessing and checking each table entry in turn. Since the number of partition keys in the table is variable, it is not known in advance how long this check will take to complete. Accordingly, the receiving port 81A may send a specific enable signal (e.g. over control link 801 or any other suitable connection) to the transmitting port 81B to indicate when the authentication checks have completed, and thereby to allow onward transmission of the packet to commence. It will be appreciated that the enable signal can be implemented in any appropriate manner, for example, by discontinuing a disable signal when any authentication checks have completed, by setting a status flag when the authentication checks have completed, etc.

(Note that a deterministic approach could also in fact be taken with this second implementation of the P_Key table. This is because the P_Key table will generally have a maximum capacity, and the minimum amount of buffering could be arranged to reflect the time taken to check a full P_Key table. In addition, it might also be possible to adjust the minimum amount of buffering to reflect the current level of occupancy of the P_Key table, given that this is relatively stable).

Although the above embodiments have utilised partition key checking as an authentication check, various other forms of checking may also be implemented. For example, in one embodiment, the subnet manager 34 specifies one or more service levels for use by each partition supported by a port. This information is then stored in conjunction with the P_Key table 1208. In other words, once the P_Key value from a packet has been used to identify a P_Key entry in the P_Key table 1208, this entry can then be used to access (either in the same table or another related table) the service level(s) allocated to that partition. The authentication check then fails if the SL value in the received packet does not correspond to one of the allocated service levels.

In another embodiment, the SL value may be correlated against the DLID value. For example, routing table 1401 might be used not only to store the output port for a given DLID, but also the set of acceptable SL values for the given DLID. The authentication of an incoming packet would then fail if the SL value in the packet did not correspond to an acceptable SL value as specified in the routing table for that particular DLID.

As already described, Figure 14 illustrates an embodiment in which the routing table 1401 is not only used for determining how to forward a packet, but also for verifying the SLID of an incoming packet. It will be appreciated that any given embodiment may support one or more of the various possible authentication checks described above.

### 5) Source Verification

Although the DLID of a packet arriving at a particular port is checked to ensure that it matches the LID for the receiving port, the InfiniBand specification does not require any check to be performed on the validity of the SLID within the packet. In other words, the specification does not require that a port confirms that the SLID field within a packet matches the LID for the originating port. This can cause problems if there is a mismatch -i.e. if the SLID of an incoming packet does not in fact match the SLID of the port from which the packet originated.

For example, Figure 12A depicts a sample network configuration of a subnet, which includes three switches 26, shown as S1**,** S2 and S3. Attached to switch S1 are nodes N1 and N2; attached to switch S2 is node N3; and attached to switch S3 are nodes N4 and N5. (It will be appreciated that the subnet shown in Figure 12A represents a rather simple network configuration, and that in practice, the number of nodes and/or switches may be significantly greater than in the diagram).

The various nodes and switches in Figure 12A are connected by the links shown, namely link L1 between node N1 and switch S1, link L2 between node N2 and switch S1, link L3 between node N3 and switch S2, link L4 between node N4 and switch S3, and link L5 between node N5 and switch S3. In addition switch S1 is joined to switch S2 by link W1, and switch S2 is joined to switch S3 by link W2.

Consider the situation where a packet is sent from a port on node N5 to a port on node N3 via switch S3 and switch S2, but where the SLID in the packet corresponds to a port in node N4 rather than to node N5. In these circumstances, if node N3 decides for some reason to send a response packet, then this response will go to node N4 rather than to node N5. If node N3 and node N4 are not in the same partition (or are both limited members within a partition), then this response packet will be discarded. However, if node N3 and node N4 are in the same partition (and are not both limited members of the partition), then this (incorrect) response packet will be visible to node N4. This can lead to the situation where node N3 might take some incorrect or inappropriate action based on its belief that it is talking to node N4 rather than to node N5. In addition, these circumstances might also be used to attempt a denial of service (DOS) attack on node N4, by trying to flood it with (misdirected) response packets from many different nodes.

Figure 13C depicts out a schematic flowchart of a method in accordance with one embodiment of the invention to address the above problem. In particular, the method shown in Figure 13C verifies the SLID of each packet arriving on a link at a port.

The method commences with setting up the network (910). As previously discussed, this includes the subnet manager assigning LIDs to the various ports, and creating routes through the network. As part of this set-up, a port receives and stores information about the source LID for incoming packets (920C) to that port.

The link is now ready to be used for communications, and so the port receives incoming packets over the link (930). For each incoming packet, the receiving port verifies whether or not the SLID field within the LRH of the packet matches the LID of the originating port - i.e. the LID stored at operation 920C (940E). If a match is confirmed, then the incoming packet is processed as normal (950), and the packet is transmitted to its onward destination. However, if a discrepancy is detected by the test at operation 940E, then some alternative action is taken (960). Such alternative action may be analogous to the processing performed, for example, if an incoming packet has a P_Key violation. Thus the incoming packet may be discarded and (optionally) some form of error notification or alert may be sent from the port to the subnet manager.

If we apply the approach of Figure 13C to the configuration of Figure 12A, switch S1 confirms, for example, that packets received over link L1 have a SLID that corresponds to node N1. Similarly, it confirms that packets received over link L2 correspond to node N2. Likewise, switch S2 confirms that packets received over link L3 have a SLID corresponding to node N3; and switch S3 confirms that packets received over link L4 have an SLID corresponding to node N4, and packets received over link L5 have an SLID corresponding to node N5.

Figure 14C illustrates an implementation of a port 81 to support the processing illustrated in Figure 13C in accordance with one embodiment of the invention. This embodiment is particularly suited to the configuration where the switch port is directly connected to an end node as just described. For example, port 81 might be located in switch S1 at the end of link L1 to receive packets from node N1 (see Figure 11).

In the embodiment of Figure 14C, port 81 receives an incoming packet 701 over link 28. The incoming packet 701 may be stored into a buffer or other component as appropriate. The SLID field 702C of the incoming packet is then extracted from the packet header by an appropriate masking or filtering of the packet 701. Note that in some embodiments, in order to maximise speed of processing, the SLID field 702C for a packet may be extracted (and subsequently tested) before the complete packet itself has arrived at the port 81. This then avoids having to wait for the whole packet to arrive before a decision can be made as to whether or not the SLID field is correct.

Port 81 further includes a logic unit 703D that compares the SLID field 702C for an incoming packet with the values stored in two registers, denoted in Figure 14C as register A 705A and register B 705B. These two registers 705A and 705B are used to store the LID range assigned to the node at the other end of the link that is arriving at port 81 (i.e. the node from which the incoming packets 701 originate). For example, in the above situation where port 81 is at the end of link L1 in Figure 12A, register A 705A may be used to store the base LID for node N1, and register B 705B may be used to store the topmost LID for node N1 (i.e. the base LID plus setting all the path bits to one).

It will be appreciated that various other possibilities could be used for the contents of registers A and B to specify the acceptable LID range for incoming packets. For example, register A may store the base LID for the node transmitting packets into the port, while register B might then store the range of LIDs allocated to that node (this corresponds to the number of LMC bits assigned to the node). Another possibility would be to use a mask and match register - i.e. a LID L is acceptable if (L&Mask) == Match.

There are two outputs from logic 703D. The first output indicates that the SLID field 702C for the incoming packet lies within the range specified by register A 705A and register B 705B. In other words, SLID field corresponds to the LID range for the expected source of the packet, and so the incoming packet 701 can be considered as validated in terms of its SLID. This is indicated by the match output 710 from logic unit 703D, and corresponds to taking the positive outcome from operation 940E in Figure 13C. In contrast, if the SLID field 702C for the incoming packet is found by logic 703D not to lie within the range specified by register A 705A and register B 705B, then instead the mismatch output 711 is indicated. This indicates that there is an error associated with the incoming packet, in that the SLID field is inconsistent with the expected origin of the packet, and so corresponds to the negative outcome from operation 940E in Figure 13C. (It will be appreciated that outputs 710 and 711 may be provided as binary alternatives on a single output line from logic unit 703D, such as an enable/disable line). The incoming packet 701 may therefore be accepted or rejected in accordance with whether or not the SLID value in the packet matches that expected for the link over which the packet was received, as indicated by signals 710, 711.

As previously indicated, the embodiment of Figure 14C is particularly suited if all packets received over a link originate from a single source, having a single (contiguous) range in LID space, such as when a switch (say S1) receives communications directly from an end node (say N1). However, the situation is a little more complicated if a switch receives a packet from another switch in the subnet 12, rather than directly from an end-node 14. For example, if switch S1 receives a packet over link W1 from switch S2 (see Figure 12A) then this packet may have a SLID corresponding to N3, node N4 or node N5, since all of these end-nodes will transmit packets via switch S2 to switch S1.

In some circumstances, there may be multiple links between switch S1 and S2 arriving into different ports on S1, in which case it may be feasible to separate out the packets onto the various links according to the origin of a packet. This can then be handled by the embodiment of Figure 14C, in that the packets on any given link (i.e. arriving at any given port) should all have the same SLID. However, in many situations a single port may have to handle incoming packets originating from multiple different nodes. Accordingly, different incoming packets could have different SLID values, depending on the particular node from which they originated (e.g. node N3, node N4, or node N5).

One way to avoid this problems is that in some embodiments, switches may be regarded as trustworthy (unlike end-nodes), in which case it may be appropriate to verify the SLID only at ingress into the switch fabric. For example, if a packet is being transferred from node N1 to node N4 via switches S1, S2, and S3, in the embodiment of Figure 12A, then one possibility is to perform SLID verification only at the first switch S1. In other words, switch S1 confirms that the packets that it receives over link L1 from node N1 have an SLID corresponding to node N1. Subsequent switches (S2 and S3 in this case) may then accept that the SLID for any packet received from a switch (rather than an end node) will already have been verified, and accordingly they may decide not to perform any further SLID verification on such packets. With this approach, SLID verification is only performed on ports that are connected to end node 14, rather than to other switches 26 in the network. It will be appreciated that in these circumstances, a port only needs to verify SLIDs from a single source, i.e. the end node in question. This can then be implemented using the pair of registers shown in the embodiment of Figure 14C.

In other embodiments however, it may be the policy of switches not to automatically assume that SLID verification has already been performed on packets received from other switches, or perhaps to trust only certain other switches in the network. For example, Figure 12A shows switches S1 and S2 marked as group 1200, where all switches within group 1200 are to be regarded as mutually trustworthy, but switches outside the group are not regarded as trustworthy. Accordingly, if switch S1 receives a communication from S2 over link W1, then it is assumed that the transmitting switch (S1) will have already performed SLID verification on the packet, and so no further SLID verification is performed. The same applies for packets travelling in the reverse direction (i.e. from switch S2 to switch Sl).

However, packets received from S3 at switch S2 over link W2 are not regarded as trustworthy. In such circumstances, switch S2 therefore performs SLID verification on packets arriving over link W2 from switch S3. Such packets may have SLIDs corresponding either to node N5 or to node N4, and accordingly switch S2 has to be able to verify against multiple ranges of SLIDs.

One possible way of handling multiple valid SLID ranges is to have multiple pairs of registers 705A and 705B. Each pair of registers can then define one valid SLID range, and an incoming packet is then verified if it lies within any of the SLID ranges defined by these pairs of registers. One difficulty here is knowing how many pairs of registers to include in the switch, since clearly the network topology is not known in advance (a single switch design may be used in multiple different networks).

Figure 14D illustrates another embodiment of the invention for verifying the SLID of an incoming packet. This embodiment shares certain components with the embodiment of Figure 14C, in that an incoming packet 701 is received and the SLID field 702C is extracted by any suitable mechanism (e.g. masking, filtering, and so on). In addition, the embodiment of Figure 14D is generally similar to that of Figure 14, except that it processes the extracted SLID field 702C, rather than both the extracted SLID and DLID fields.

Logic 703E within port 81 uses the extracted SLID field 702C to access a port routing table 1401. It will be appreciated that a conventional InfiniBand switch has a single routing table for routing packets through the switch. In particular, such a routing table maps the destination LID (DLID) of a packet to port number. Accordingly, when a packet is received at a port, the DLID for the incoming packet is extracted and used as an index into the routing table. This returns the (output) port corresponding to the DLID. The receiving port therefore knows which port to route the packet through the switch to, in order to ensure that the packet is sent onwards to the correct destination.

In accordance with one embodiment of the present invention, switch 26 includes a routing table 1401 as previously described that is specific to each port 81 on the switch. As for a conventional routing table, this routing table 1401 can be regarded as having two columns, namely a first column 1410 representing LID 1410, and a second column 1420 representing port. Accordingly, this routing table 1401 can be indexed by LID in order to obtain a port number.

Routing table 1401 can be used by the port 81 to route packets through the switch 26 in the manner just described in relation to existing systems. In other words, a DLID can be extracted from an incoming packet 701 and used to index into the port routing table 1401, thereby allowing the appropriate port for onward transmission of the packet to be identified. The port can then route the packet through the switch to the outgoing port.

In accordance with one embodiment of the present invention, the port routing table 1401 can also be used to perform SLID verification. Thus rather than specifying an acceptable range of SLIDs using registers 705A and 705B, as in the embodiment of Figure 14C, the embodiment of Figure 14D specifies this range instead in port routing table 1401.

The LID values 1410 in port routing table 1401 may cover both the internal and external range of LID values. Each LID value 1410 has a corresponding port value 1420. Associated with the external LID values are the port numbers for onward transmission, as in a conventional routing table. Associated with the internal LID values (i.e. with LIDs corresponding to an acceptable SLID) is the port number for the port itself, in other words the port that owns routing table 1401.

(It will be appreciated that for the embodiment of Figure 10, routing table 1401 of Figure 14D needs an extra bit in the port column 1420, in view of the possibility of both internal and external LID state. In particular, the routing table 1401 now has to identify one of nine different ports, including the owning port, rather than just the eight different ports to which the packet might be forwarded. This extra bit is only required if the switch has N+1 data ports, where N is a power of two).

Routing table 1401 can be used to support one or more valid SLID ranges by entering each range into routing table 1401, and allocating as the corresponding port number 1420 the port number for the port with which that particular routing table 1401 is associated. It will be appreciated that this approach has the advantage of using an infrastructure (i.e. port routing table 1401) that may already be present within port 81.

As previously mentioned, there may be some LID values that do not correspond either to a valid DLID or to a valid SLID. For example, some LID values may not be assigned within the network 12 (or may not have routes associated with them). In addition, as previously mentioned, switch 26 may have its own LID range corresponding to port 0 (the management interface). These LID ranges can then be assigned special port numbers in the routing table 1401, e.g. port -1 for an unassigned LID value, and port 0 for the LID range of the management interface. In general these special port values do not represent a valid SLID or a valid DLID, and have to be specially handled.

One possibility is to use registers, such as registers 705A and 705B, to pick out packets that have an SLID or DLID in these special ranges. In this case, the special ranges do not need to be added to the routing table itself 1401, rather packets having an SLID or DLID in such special ranges can be identified using the registers, and processed separately from other packets.

It will be appreciated where there are multiple valid SLID ranges all being received at the same port, the verification described above confirms that the SLID of an incoming packet corresponds to one of the valid SLID ranges. This is not exactly the same as saying that the SLID in the packet corresponds exactly with the source of the packet, only that it corresponds to one of the possible sources (for that network configuration). This ambiguity can be avoided if SLID verification is always performed at first ingress of the packet into the switching fabric, i.e. at the switch port connected to the end node that originated the packet.

Although the SLID verification described herein has been shown as having been implemented in a switch 26, it will be appreciated that such verification may also be implemented in an end node 14. An end node will not normally have a routing table 1401, but may be provided with one or more pairs of registers 705A, 705B such as for the embodiment of Figure 14C. Since an end node is connected to a switch, it may potentially receive packets from multiple sources (i.e. corresponding to multiple SLID ranges). However, at any given time, the end node might only be involved in communications with a single other node, in which case there would only be a single SLID range to confirm.

Although the embodiment of Figure 14D utilises a combined DUD/SLID lookup table 1401, in another embodiment separate lookup tables could be provided for DLID and SLID. The SLID lookup table would operate as described above, namely for any given input LID value it would return a result indicative of whether or not that LID represented a valid SLID. Splitting the DLID and SLID lookups would be less compact than the approach of Figure 14D, but could be appropriate if switch 26 has only a single shared routing table rather than a per-port routing table. In this case it is more difficult to accommodate the SLID lookup into the DLID routing table (since the SLID lookup is port specific, unlike the DLID routing table), and so the switch might support an SLID lookup table for SLID verification. This could be provided on a per port basis, or alternatively as a shared table for all ports on the switch.

One possibility would be to have a table of flag arrays shared by all input ports, where each flag array represents a bit mask for a specific SLID value. The SLID value could then be used as a table index to locate the appropriate bit mask. A bit mask for a given SLID value then comprises a series of flags, one for each port. Each flag is a (single bit) binary value indicating whether the corresponding port is allowed to receive the corresponding SLID value. Alternatively, in a per-port implementation, each input port could have a table of (single bit) flags, with each flag defining whether or not a corresponding SLID value is acceptable.

One embodiment of the invention described herein is provided as a computer program product, which may comprise program instructions stored on a removable storage medium, for example an optical (CD ROM, DVD, etc), semiconductor (e.g. flash memory) or magnetic (floppy disk, tape, etc) device. Such a medium can then be introduced into a computer system, such as a server, a client, a smart card, a network device (e.g. a switch) etc., in order to transfer the program instructions to the system. Alternatively, the program instructions may be transferred to the computer system by download via a transmission signal medium over a network, for example, a local area network (LAN), the Internet, and so on. The transferred program instructions are often stored on a hard disk or other non-volatile storage of a computer system, and loaded for use into random access memory (RAM) for execution by a system processor.

A variety of particular embodiments have been described in detail herein, but it will be appreciated that this is by way of exemplification only. The skilled person will be aware of many further potential modifications and adaptations that fall within the scope of the claims and their equivalents.

## Claims

1. A method of operating a switch (26) in a communications network (10), said switch having multiple ports (81A, 81B, etc), the method comprising:
storing, for each port in the switch, a respective set of routings for making forwarding decisions, wherein the respective set of routings for a port are specific to that port;
receiving a packet at a port in the switch;
accessing the set of routings corresponding to the port at which the packet was received and determining a port from which to forward the packet from the switch in accordance with said set of routings;
forwarding the received packet from the port where the packet is received to an output buffer (712) of each output port in the switch; and
transmitting a receive enable signal to a selected one of the output buffers, wherein said selected output buffer corresponds to said determined port;
storing the forwarded packet at the selected one of the output buffers only if the output buffer also receives a receive enable signal from the port that forwarded the packet; and
forwarding the received packet from the port over the network from said determined port.

2. The method of claim 1, wherein the set of routings for a port is stored in a routing table (1401).

3. The method of claim 2, wherein each port in the switch includes its own routing table for storing the set of routings associated with the port.

4. The method of any preceding claim, wherein said routings map destination identifiers (1410) to output ports (1420), and said method further comprises:
extracting a destination identifier from the received packet;
and using the extracted destination identifier to access the set of routings.

5. The method of claim 4, wherein the set of routings may indicate that certain destination identifiers are invalid for a port, and the method further comprises discarding a packet received at the port if the destination identifier extracted from the packet is indicated as invalid.

6. The method of claim 5, wherein a control bit may be included in the set of routings for each destination identifier to indicate whether or not the destination identifier is valid for that particular port.

7. The method of claim 5, wherein the set of routings for a port indicates that a destination identifier is invalid for that port by identifying the port that received the packet as the output port.

8. The method of claim 5, wherein sets of routings for different ports indicate different destination identifiers as invalid.

9. The method of any of claims 4 to 8, wherein sets of routings for different ports indicate different output ports for a packet having a given destination identifier.

10. The method of any preceding claim, wherein the port at which the packet is received routes the packet through a switching matrix (850) to reach said determined output port.

11. The method of any preceding claim, further comprising authenticating a source identifier in said received packet.

12. The method of any preceding claim, wherein said switch supports the InfiniBand architecture.

13. A switch (26) for use in a communications network (10), the switch comprising:
multiple ports (81A, 81B, etc) for connection to the network;
for each of said multiple ports, a respective stored set of routings for making forwarding decisions, wherein the respective set of routings for a port are specific to that port; and
control logic (703) operable to
receive a packet at a port in the switch;
access the set of routings corresponding to the port at which the packet was received and determining a port from which to forward the packet from the switch in accordance with said set of routings;
forward the received packet from the port where the packet is received to an output buffer (712) of each output port in the switch; and
transmit a receive enable signal to a selected one of the output buffers, wherein said selected output buffer corresponds to said determined port;
store the forwarded packet at the selected one of the output buffers only if the output buffer also receives a receive enable signal from the port that forwarded the packet; and
forward the received packet from the port over the network from said determined port.

14. The switch of claim 13, wherein the set of routings for a port is stored in a routing table (1401).

15. The switch of claim 14, wherein each port in the switch includes its own routing table for storing the set of routings associated with the port.

16. The switch of any of claims 13 to 15, wherein said routings map destination identifiers (1410) to output ports (1420), and said control logic is further operable to extract a destination identifier from the received packet and to use the extracted destination identifier to access the set of routings.

17. The switch of claim 16, wherein the set of routings may indicate that certain destination identifiers are invalid for a port, wherein a packet received at the port is discarded if the destination identifier extracted from the packet is indicated as invalid.

18. The switch of claim 17, wherein a control bit may be included in the set of routings for each destination identifier to indicate whether or not the destination identifier is valid for that particular port.

19. The switch of claim 18, wherein the set of routings for a port indicates that a destination identifier is invalid for that port by identifying the port that received the packet as the output port.

20. The switch of claim 17, wherein sets of routings for different ports indicate different destination identifiers as invalid.

21. The switch of any of claims 16 to 20, wherein sets of routings for different ports indicate different output ports for a packet having a given destination identifier.

22. The switch of any of claims 13 to 21, wherein the port at which the packet is received routes the packet through a switching matrix (850) to reach said determined output port.

23. The switch of any of claims 13 to 22, wherein a source identifier in said received packet is authenticated.

24. The switch of any of claims 13 to 23, wherein said switch supports the InfiniBand architecture.

25. The switch of claim 13, further comprising:
memory for associating at least one source identifier with a link over said communications network and connected to one of said ports, wherein a source identifier (702C) is extracted from said received packet; and
logic (703C) for comparing the extracted source identifier with said at least one source identifier associated with said link to authenticate the packet;
wherein the switch includes a routing table for storing said set of routings for each port and wherein said routing table is used to perform said authentication.

26. The switch of claim 25, wherein said source identifier is extracted from a header of the packet.

27. The switch of claim 26, wherein said at least one source identifier associated with a link comprises at least one range of source identifiers.

28. The switch of claim 27, wherein the extracted source identifier is authenticated if it lies within said at least one range of source identifiers.

29. The switch of claim 25, wherein said logic accesses the routing table using the extracted source identifier as if it were a destination identifier; and determines the port mapped to the extracted source identifier in the routing table, wherein the packet is only authenticated if the determined port is connected to the link on which the packet is received.

30. The switch of claim 25, wherein said routing table contains multiple ranges of associated source identifiers, and the packet is authenticated if the extracted source identifier corresponds to any of said multiple ranges.

31. The switch of any of claims 25 to 30, wherein the incoming packet is discarded if the packet is not authenticated.

32. The switch of any of claims 25 to 31, wherein an error notification is raised if the packet is not authenticated.

33. The switch of any of claims 25 to 32, wherein said authentication is only performed where said link is connected to an untrusted node in the network.

34. A computer program product comprising program instructions that when loaded into a machine cause the machine to perform the method of any of claims 1 to 12.

## Patentansprüche

1. Verfahren zum Betreiben einer Vermittlungsstelle (26) in einem Kommunikationsnetz (10), wobei die Vermittlungsstelle mehrfache Anschlüsse (81A, 81 B, etc.) aufweist, wobei das Verfahren umfasst:
Speichern, für jeden Anschluss in der Vermittlungsstelle, eines jeweiligen Satzes von Routings zum Ausführen von Sendeentscheidungen, wobei der jeweilige Satz von Routings für einen Anschluss spezifisch für diesen Anschluss ist;
Empfangen eines Pakets an einem Anschluss in der Vermittlungsstelle;
Zugreifen auf den Satz von Routings, die dem Anschluss entsprechen, an welchem das Paket empfangen wurde, und die einen Anschlusses bestimmen, von welchem das Paket von der Vermittlungsstelle zu senden ist, in Übereinstimmung mit dem Satz von Routings;
Senden des empfangenen Pakets von dem Anschluss, wo das Paket empfangen wird, zu einem Ausgangspuffer (712) jedes Ausgangsanschlusses in der Vermittlungsstelle; und
Übertragung eines Empfangs-Freigabesignals zu einem ausgewählten der Ausgangspuffer, wobei der ausgewählte Ausgangspuffer dem bestimmten Anschluss entspricht;
Speichern des gesendeten Pakets in dem ausgewählten der Ausgangspuffer nur dann, wenn der Ausgangspuffer auch ein Empfangs-Freigabesignal von dem Anschluss empfängt, der das Paket sendete; und
Senden des empfangenen Pakets von dem Anschluss über das Netz von dem bestimmten Anschluss.

2. Verfahren nach Anspruch 1, wobei der Satz von Routings für einen Anschluss in einer Routing-Tabelle (1401) gespeichert wird.

3. Verfahren nach Anspruch 2, wobei jeder Anschluss in der Vermittlungsstelle seine eigene Routing-Tabelle zum Speichern des Satzes von Routings, die dem Anschluss zugeordnet sind, einschließt.

4. Verfahren nach einem voranstehenden Anspruch, wobei die Routings Zielidentifizierer (1410) zu Ausgangsanschlüssen (1420) abbilden, und wobei das Verfahren ferner umfasst:
Extrahieren eines Zielidentifizierers von dem empfangenen Paket; und
Verwenden des extrahierten Zielidentifizierers, um auf den Satz von Routings zuzugreifen.

5. Verfahren nach Anspruch 4, wobei der Satz von Routings anzeigen kann, dass bestimmte Zielidentifizierer für einen Anschluss ungültig sind, und wobei das Verfahren ferner ein Verwerfen eines Pakets umfasst, das an dem Anschluss empfangen wird, wenn der von dem Paket extrahierte Zielidentifizierer, als ungültig angezeigt wird.

6. Verfahren nach Anspruch 5, wobei ein Kontrollbit in dem Satz von Routings für jeden Zielidentifizierer eingeschlossen sein kann, um anzuzeigen, ob der Zielidentifizierer für diesen bestimmten Anschluss gültig ist oder nicht.

7. Verfahren nach Anspruch 5, wobei der Satz von Routings für einen Anschluss anzeigt, dass ein Zielidentifizierer für diesen Anschluss ungültig ist, indem der Anschluss, der das Paket empfing, als der Ausgangsanschluss identifiziert wird.

8. Verfahren nach Anspruch 5, wobei Sätze von Routings für unterschiedliche Anschlüsse unterschiedliche Zielidentifizierer als ungültig anzeigen.

9. Verfahren nach einem der Ansprüche 4 bis 8, wobei Sätze von Routings für unterschiedliche Anschlüsse unterschiedliche Ausgangsanschlüsse für ein Paket anzeigen, das einen gegebenen Zielidentifizierer aufweist.

10. Verfahren nach einem voranstehenden Anspruch, wobei der Anschluss, an welchem das Paket empfangen wird, das Paket durch eine Vermittlungsstellen-Matrix (850) leitet, um den bestimmten Ausgangsanschluss zu erreichen.

11. Verfahren nach einem voranstehenden Anspruch, ferner umfassend ein Authentifizieren eines Quellenidentifizierers in dem empfangenen Paket.

12. Verfahren nach einem voranstehenden Anspruch, wobei die Vermittlungsstelle die InfiniBand-Architektur unterstützt.

13. Vermittlungsstelle (26) zur Verwendung in einem Kommunikationsnetz (10), wobei die Vermittlungsstelle umfasst:
mehrfache Anschlüsse (81 A, 81 B, etc.) zur Verbindung mit dem Netz;
für jeden der mehrfachen Anschlüsse, einen jeweiligen gespeicherten Satz von Routings zum Ausführen von Sendeentscheidungen, wobei der jeweilige Satz von Routings für einen Anschluss spezifisch für diesen Anschluss ist; und
eine Steuerlogik (703), die betriebsfähig ist,
ein Paket an einem Anschluss in der Vermittlungsstelle zu empfangen;
auf den Satz von Routings, die dem Anschluss entsprechen, an welchem das Paket empfangen wurde, und die einen Anschluss bestimmen, von welchem das Paket von der Vermittlungsstelle zu senden ist, zuzugreifen, in Übereinstimmung mit dem Satz von Routings;
das empfangene Paket von dem Anschluss, wo das Paket empfangen wird, zu einem Ausgangspuffer (712) jedes Ausgangsanschlusses in der Vermittlungsstelle zu senden; und
ein Empfangs-Freigabesignal zu einem ausgewählten der Ausgangspuffer zu übertragen, wobei der ausgewählte Ausgangspuffer dem bestimmten Anschluss entspricht;
das gesendete Paket in dem ausgewählten der Ausgangspuffer nur dann zu speichern, wenn der Ausgangspuffer auch das Empfangs-Freigabesignal von dem Anschluss empfängt, der das Paket sendete; und
das empfangene Paket von dem Anschluss über das Netz von dem bestimmten Anschluss zu senden.

14. Vermittlungsstelle nach Anspruch 13, wobei der Satz von Routings für einen Anschluss in einer Routing-Tabelle (1401) gespeichert ist.

15. Vermittlungsstelle nach Anspruch 14, wobei jeder Anschluss in der Vermittlungsstelle seine eigene Routing-Tabelle zum Speichern des Satzes von Routings, die dem Anschluss zugeordnet sind, einschließt.

16. Vermittlungsstelle nach einem der Ansprüche 13 bis 15, wobei die Routings Zielidentifizierer (1410) zu Ausgangsanschlüssen (1420) abbilden, und die Steuerlogik ferner betriebsfähig ist, einen Zielidentifizierer von dem empfangenen Paket zu extrahieren und den extrahierten Zielidentifizierer zu verwenden, um auf den Satz von Routings zuzugreifen.

17. Vermittlungsstelle nach Anspruch 16, wobei der Satz von Routings anzeigen kann, dass bestimmte Zielidentifizierer für einen Anschluss ungültig sind, wobei ein Paket, das an dem Anschluss empfangen wird, verworfen wird, wenn der von dem Paket extrahierte Zielidentifizierer als ungültig angezeigt wird.

18. Vermittlungsstelle nach Anspruch 17, wobei ein Kontrollbit in dem Satz von Routings für jeden Zielidentifizierer eingeschlossen sein kann, um anzuzeigen, ob der Zielidentifizierer für diesen bestimmten Anschluss gültig ist oder nicht.

19. Vermittlungsstelle nach Anspruch 18, wobei der Satz von Routings für einen Anschluss anzeigt, dass ein Zielidentifizierer für diesen Anschluss ungültig ist, indem der Anschluss, der das Paket empfing, als der Ausgangsanschluss identifiziert ist.

20. Vermittlungsstelle nach Anspruch 17, wobei Sätze von Routings für unterschiedliche Anschlüsse unterschiedliche Zielidentifizierer als ungültig anzeigen.

21. Vermittlungsstelle nach einem der Ansprüche 16 bis 20, wobei Sätze von Routings für unterschiedliche Anschlüsse unterschiedliche Ausgangsanschlüsse für ein Paket anzeigen, das einen gegebenen Zielidentifizierer aufweist.

22. Vermittlungsstelle nach einem der Ansprüche 13 bis 21, wobei der Anschluss, an welchem das Paket empfangen wird, das Paket durch eine Vermittlungsstellen-Matrix (850) leitet, um den bestimmten Ausgangsanschluss zu erreichen.

23. Vermittlungsstelle nach einem der Ansprüche 13 bis 22, wobei ein Quellenidentifizierer in dem empfangenen Paket authentifiziert ist.

24. Vermittlungsstelle nach einem der Ansprüche 13 bis 23, wobei die Vermittlungsstelle die InfiniBand-Architektur unterstützt.

25. Vermittlungsstelle nach Anspruch 13, ferner umfassend:
einen Speicher zum Zuordnen von zumindest einem Quellenidentifizierer zu einer Verbindung über das Kommunikationsnetz, und verbunden mit einem der Anschlüsse, wobei der Quellenidentifizierer (702C) von dem empfangenen Paket extrahiert ist; und
eine Logik (703C) zum Vergleichen des extrahierten Quellenidentifizierers mit dem zumindest einen Quellenidentifizierer, der der Verbindung zugeordnet ist, um das Paket zu authentifizieren;
wobei die Vermittlungsstelle eine Routing-Tabelle zum Speichern des Satzes von Routings für jeden Anschluss einschließt, und wobei die Routing-Tabelle verwendet wird, um die Authentifizierung durchzuführen.

26. Vermittlungsstelle nach Anspruch 25, wobei der Quellenidentifizierer von einem Header des Pakets extrahiert ist.

27. Vermittlungsstelle nach Anspruch 26, wobei der zumindest eine Quellenidentifizierer, der einer Verbindung zugeordnet ist, zumindest einen Bereich von Quellenidentifizierern umfasst.

28. Vermittlungsstelle nach Anspruch 27, wobei der extrahierte Quellenidentifizierer authentifiziert wird, wenn er innerhalb des zumindest einen Bereichs von Quellenidentifizierern liegt.

29. Vermittlungsstelle nach Anspruch 25, wobei die Logik auf die Routing-Tabelle unter Verwendung des extrahierten Quellenidentifizierers zugreift, als ob er ein Zielidentifizierer wäre, und den Anschluss bestimmt, der auf den extrahierten Quellenidentifizierer in der Routing-Tabelle abgebildet ist, wobei das Paket nur authentifiziert ist, wenn der bestimmte Anschluss mit dem Link, an welchem das Paket empfangen wird, verbunden ist.

30. Vermittlungsstelle nach Anspruch 25, wobei die Routing-Tabelle mehrfache Bereiche von zugeordneten Quellenidentifizierern enthält, und wobei das Paket authentifiziert wird, wenn der extrahierte Quellenidentifizierer einem der mehrfachen Bereiche entspricht.

31. Vermittlungsstelle nach einem der Ansprüche 25 bis 30, wobei das eingehenden Paket verworfen wird, wenn das Paket nicht authentifiziert ist.

32. Vermittlungsstelle nach einem der Ansprüche 25 bis 31, wobei eine Fehlermeldung ausgegeben wird, wenn das Paket nicht authentifiziert ist.

33. Vermittlungsstelle nach Anspruch 25 bis 32, wobei die Authentifizierung nur durchgeführt wird, wenn der Link mit einem nicht-vertrauenswürdigen Knoten in dem Netz verbunden ist.

34. Computerprogrammprodukt, umfassend Programmanweisungen, welche, wenn sie in ein Gerät geladen sind, das Gerät dazu veranlassen, das Verfahren nach einem der Ansprüche 1 bis 12 durchzuführen.

## Revendications

1. Procédé d'utilisation d'un commutateur (26) dans un réseau de communication (10), ledit commutateur étant équipé de plusieurs ports (81A, 81 B, etc.), ledit procédé comprenant les étapes consistant à :
stocker, pour chaque port du commutateur, un ensemble de routages respectif afin de prendre les décisions de transfert, l'ensemble de routages respectif pour un port étant spécifique à ce port ;
recevoir un paquet au niveau de ce port du commutateur ;
accéder à l'ensemble de routages correspondant au port qui a reçu le paquet et déterminer un port à partir duquel transférer le paquet à partir du commutateur conformément au dit ensemble de routages ;
transférer le paquet reçu à partir du port où le paquet a été reçu à un circuit tampon de sortie (712) de chaque port de sortie du commutateur ; et
transmettre un signal d'activation de réception à un circuit tampon sélectionné parmi les circuits tampons de sortie, ledit circuit tampon de sortie sélectionné correspondant au dit port déterminé ;
stocker le paquet transféré au circuit tampon de sortie sélectionné parmi les circuits tampons de sortie uniquement si le circuit de tampon de sortie reçoit également un signal d'activation de réception du port qui a transféré le paquet ; et
transférer le paquet reçu du port sur le réseau à partir dudit port déterminé.

2. Procédé selon la revendication 1, dans lequel l'ensemble de routages pour un port est stocké dans une table de routage (1401).

3. Procédé selon la revendication 2, dans lequel chaque port du commutateur inclut sa propre table de routage pour stocker l'ensemble de routages associé au port.

4. Procédé selon l'une quelconque des revendications précédentes, dans lequel lesdits routages font correspondre des identificateurs de destination (1410) à des ports de sortie (1420), ledit procédé comprenant en outre les étapes consistant à :
extraire un identificateur de destination du paquet reçu ;
et utiliser l'identificateur de destination extrait afin d'accéder à l'ensemble de routages.

5. Procédé selon la revendication 4, dans lequel l'ensemble de routages peut indiquer que certains identificateurs de destination ne sont pas valides pour un port, le procédé comprenant en outre les étapes consistant à rejeter un paquet reçu par le port si l'identificateur de destination extrait du paquet est indiqué comme n'étant pas valide.

6. Procédé selon la revendication 5, dans lequel un bit de contrôle peut être inclus dans l'ensemble de routages pour chaque identificateur de destination afin d'indiquer si l'identificateur de destination est valide ou non pour ce port particulier.

7. Procédé selon la revendication 5, dans lequel l'ensemble de routages pour un port indique qu'un identificateur de destination n'est pas valide pour ce port en identifiant le port qui a reçu le paquet comme étant le port de sortie.

8. Procédé selon la revendication 5, dans lequel des ensembles de routages pour différents ports indiquent que différents identificateurs de destination ne sont pas valides.

9. Procédé selon l'une quelconque des revendications 4 à 8, dans lequel des ensembles de routages pour différents ports indiquent différents ports de sortie pour un paquet ayant un identificateur de destination donné.

10. Procédé selon l'une quelconque des revendications précédentes, dans lequel le port qui reçoit le paquet route le paquet via une matrice de commutation (850) afin d'atteindre ledit port de sortie déterminé.

11. Procédé selon l'une quelconque des revendications précédentes, comprenant en outre l'étape consistant à authentifier un identificateur source dans ledit paquet reçu.

12. Procédé selon l'une quelconque des revendications précédentes, dans lequel ledit commutateur prend en charge l'architecture InfiniBand.

13. Commutateur (26) destiné à être utilisé dans un réseau de communication (10), le commutateur comprenant :
plusieurs ports (81A, 81 B, etc.) pour une connexion au réseau ;
pour chacun des dits plusieurs ports, un ensemble de routages stocké respectif afin de prendre les décisions de transfert, l'ensemble de routages respectif pour un port étant spécifique à ce port ; et
une logique de commande (703) utilisable pour
recevoir un paquet au niveau d'un port du commutateur ;
accéder à l'ensemble de routages correspondant au port qui a reçu le paquet et déterminer un port à partir duquel transférer le paquet à partir du commutateur conformément au dit ensemble de routages ;
transférer le paquet reçu à partir du port où le paquet a été reçu à un circuit tampon de sortie (712) de chaque port de sortie du commutateur ; et
transmettre un signal d'activation de réception à un circuit tampon sélectionné parmi les circuits tampons de sortie, ledit circuit tampon de sortie sélectionné correspondant au dit port déterminé ;
stocker le paquet transféré au circuit tampon de sortie sélectionné parmi les circuits tampons de sortie uniquement si le circuit de tampon de sortie reçoit également un signal d'activation de réception du port qui a transféré le paquet ; et
transférer le paquet reçu du port sur le réseau à partir dudit port déterminé.

14. Commutateur selon la revendication 13, dans lequel l'ensemble de routages pour un port est stocké dans une table de routage (1401).

15. Commutateur selon la revendication 14, dans lequel chaque port du commutateur inclut sa propre table de routage pour stocker l'ensemble de routages associé au port.

16. Commutateur selon l'une quelconque des revendications 13 à 15, dans lequel lesdits routages font correspondre des identificateurs de destination (1410) à des ports de sortie (1420), et dans lequel ladite logique de commande est utilisable en outre pour extraire un identificateur de destination du paquet reçu et pour utiliser l'identificateur de destination extrait afin d'accéder à l'ensemble de routages.

17. Commutateur selon la revendication 16, dans lequel l'ensemble de routages peut indiquer que certains identificateurs de destination ne sont pas valides pour un port, et dans lequel un paquet reçu par le port est rejeté si l'identificateur de destination extrait du paquet est indiqué comme n'étant pas valide.

18. Commutateur selon la revendication 17, dans lequel un bit de contrôle peut être inclus dans l'ensemble de routages pour chaque identificateur de destination afin d'indiquer si l'identificateur de destination est valide ou non pour ce port particulier.

19. Commutateur selon la revendication 18, dans lequel l'ensemble de routages pour un port indique qu'un identificateur de destination n'est pas valide pour ce port en identifiant le port qui a reçu le paquet comme étant le port de sortie.

20. Commutateur selon la revendication 17, dans lequel des ensembles de routages pour différents ports indiquent que différents identificateurs de destination ne sont pas valides.

21. Commutateur selon l'une quelconque des revendications 16 à 20, dans lequel des ensembles de routages pour différents ports indiquent différents ports de sortie pour un paquet ayant un identificateur de destination donné.

22. Commutateur selon l'une quelconque des revendications 13 à 21, dans lequel le port qui reçoit le paquet route le paquet via une matrice de commutation (850) afin d'atteindre ledit port de sortie déterminé.

23. Commutateur selon l'une quelconque des revendications 13 à 22, dans lequel un identificateur source dans ledit paquet reçu est authentifié.

24. Commutateur selon l'une quelconque des revendications 13 à 23, dans lequel ledit commutateur prend en charge l'architecture InfiniBand.

25. Commutateur selon la revendication 13, comprenant en outre :
une mémoire afin d'associer au moins un identificateur source à une liaison sur ledit réseau de communication et connectée à l'un des dits ports, dans lequel un identificateur source (702C) est extrait dudit paquet reçu ; et
une logique (703C) pour comparer l'identificateur source extrait à ledit au moins un identificateur source associé à ladite liaison afin d'authentifier le paquet ;
dans lequel le commutateur inclut une table de routage pour stocker ledit ensemble de routages pour chaque port et dans lequel ladite table de routage est utilisée pour réaliser ladite authentification.

26. Commutateur selon la revendication 25, dans lequel ledit identificateur source est extrait d'un en-tête du paquet.

27. Commutateur selon la revendication 26, dans lequel ledit au moins un identificateur source associé à une liaison comprend au moins une série d'identificateurs source.

28. Commutateur selon la revendication 27, dans lequel l'identificateur source extrait est authentifié s'il figure parmi ladite au moins une série d'identificateurs source.

29. Commutateur selon la revendication 25, dans lequel ladite logique accède à la table de routage au moyen de l'identificateur source extrait comme s'il s'agissait d'un identificateur de destination, et détermine le port mis en correspondance avec l'identificateur source extrait dans la table de routage, et dans lequel le paquet est authentifié uniquement si le port déterminé est connecté à la liaison sur laquelle le paquet est reçu.

30. Commutateur selon la revendication 25, dans lequel ladite table de routage contient plusieurs séries d'identificateurs source associés, et dans lequel le paquet est authentifié si l'identificateur source extrait correspond à l'une quelconque desdites plusieurs séries.

31. Commutateur selon l'une quelconque des revendications 25 à 30, dans lequel le paquet entrant est rejeté si le paquet n'est pas authentifié.

32. Commutateur selon l'une quelconque des revendications 25 à 31, dans lequel une notification d'erreur est émise si le paquet n'est pas authentifié.

33. Commutateur selon l'une quelconque des revendications 25 à 32, dans lequel ladite authentification est réalisée uniquement lorsque ladite liaison est connectée à un noeud non fiable du réseau.

34. Produit de type programme informatique comprenant des instructions de programme qui, lorsqu'elles sont chargées sur une machine, font en sorte que la machine exécute le procédé selon l'une quelconque des revendications 1 à 12.
